# EUROPEAN PATENT SPECIFICATION

(11) **EP 3 443 775 B1**
(45) Date of publication and mention of the grant of the patent: **21.04.2021**
(21) Application number: 17717917.3
(22) Date of filing: 01.03.2017
(51) Int. Cl.: H04W 36/00, H04W 92/02

(54) **TECHNIQUES FOR CONTINUED DATA TRANSMISSION DURING HANDOVER OPERATIONS**
VERFAHREN ZUR FORTWÄHRENDEN DATENÜBERTRAGUNG WÄHREND ÜBERGABEOPERATIONEN
TECHNIQUES DE TRANSMISSION DE DONNÉES CONTINUE PENDANT DES OPÉRATIONS DE TRANSFERT

(30) Priority: 12.04.2016 US 201662321619 P
(43) Date of publication of application: 20.02.2019
(60) Divisional application: 19179171.4
(73) Proprietor: Intel IP Corporation, Santa Clara, CA 95054 (US)
(72) Inventor: YIU, Candy, Portland, OR 97201 (US)
(74) Representative: HGF
(86) International application number: PCT/US2017/020287
(87) International publication number: WO 2017/180258

(56) References cited:
- US-A1- 2013 223 408
- US-A1- 2015 105 084
- ZTE CORPORATION: "Evaluation of solutions on service interruption enhancement", 3GPP DRAFT; R2-162565, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 1 April 2016 (2016-04-01), XP051082159, Retrieved from the Internet: URL:http://www.3gpp.org/ftp/tsg_ran/WG2_RL 2/TSGR2_93bis/Docs/ [retrieved on 2016-04-01]
- INTEL CORPORATION: "Discussion of solution 2: Maintaining source eNB connection during handover", 3GPP DRAFT; R2-162719, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082516, Retrieved from the Internet: URL:http://www.3gpp.org/ftp/tsg_ran/WG2_RL 2/TSGR2_93bis/Docs/ [retrieved on 2016-04-02]
- SAMSUNG: "Overview of solutions for the LTE mobility enhancements", 3GPP DRAFT; R3-160675, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Bangalore, India; 20160411 - 20160415 1 April 2016 (2016-04-01), XP051082877, Retrieved from the Internet: URL:http://www.3gpp.org/ftp/tsg_ran/WG3_Iu /TSGR3_91bis/Docs/ [retrieved on 2016-04-01]

## Description

### TECHNICAL FIELD

Embodiments herein generally relate to handover operations between nodes in communication networks.

### BACKGROUND

To enhance the ability of a communication network to transmit data during mobility events between network elements, it may be desirable to implement techniques that minimize service interruption during these mobility events. One such mobility event is the handover between network elements. Improved techniques for continued data transmission during handover operations are desired.

ZTE CORPORATION, "Evaluation of solutions on service interruption enhancement", vol. RAN WG2, no. Dubrovnik, Croatia; 20160411 - 20160415, (20160401), 3GPP DRAFT; R2-162565, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, relates to maintaining source eNB connection during handover.

US2015105084A1 relates to handover from a serving cell to a target cell, the method sending a measurement report to the serving cell; and transmitting a reconfiguration complete message to the target cell; wherein the measurement report includes downlink timing measurements for the target cell. In a method at a source network element for handover of a user equipment from the source network element to a target network element, the method receiving a measurement report from the user equipment; sending a handover request to the target network element; receiving a handover request acknowledgement from the target network element, the handover request acknowledgement including a reconfiguration message and at least one downlink subframe in which an uplink grant is expected at the target network element for the user equipment; and forwarding the reconfiguration message and at least one downlink subframe to the user equipment.

US2013223408 A1 discloses a method of determining whether each of a plurality of target base stations is capable of providing a fast ranging opportunity to a mobile station served by the serving base station, and sending a handover message to the mobile station, the handover message indicating whether each of the plurality of target base stations is capable of providing the fast ranging opportunity to the mobile station and indicating the action time after which the target base station can send an uplink map indicating when the mobile station should send a fast ranging request, to the mobile station.

### SUMMARY

Aspects and embodiments of the invention are set out in the appended claims.

### BRIEF DESCRIPTION OF THE DRAWINGS

**FIG. 1** illustrates an embodiment of a communications network.
**FIG. 2** illustrates an embodiment of a network architecture.
**FIG. 3A** illustrates a communications message flow.
**FIG. 3B** illustrates a communications message flow.
**FIG. 3C** illustrates a communications message flow.
**FIG. 3D** illustrates a communications message flow.
**FIG. 4** illustrates a data stream according to an embodiment.
**FIG. 5A** illustrates a communications message flow.
**FIG. 5B** illustrates a communications message flow.
**FIG. 5C** illustrates a communications message flow.
**FIG. 5D** illustrates a communications message flow.
**FIG. 6** illustrates an embodiment of a logic flow.
**FIG. 7** illustrates an embodiment of a storage medium.
**FIG. 8** illustrates an embodiment of a computing architecture.
**FIG. 9** illustrates an embodiment of a communications architecture.
**FIG. 10** illustrates an embodiment of a device.
**FIG. 11** illustrates an embodiment of a wireless network.
**FIG. 12** illustrates an embodiment of a communication device.

### DETAILED DESCRIPTION

To perform handover techniques, a user equipment (UE) may send measurement report to a source evolved Node B (eNB) once a handover operation is triggered and a time-to-trigger (TTT) has expired. The source eNB may then send a handover request to a target eNB. Once the source eNB receives a handover acknowledgement from target eNB, it may send a *RRCConnectionReconfiguration* message to the UE including mobility control information (containing random-access channel (RACH) preamble information generated by the target eNB). The UE may then perform a RACH procedure toward the target eNB. When the UE receives a random-access response (RAR) from the target eNB, it may send the *RRCConnectionReconfigurationComplete* message indicating the handover operation is completed. Data transmission may be interrupted during this procedure, particularly between the time a handover operation is triggered and the UE receives a RAR from the target eNB.

Various embodiments may be generally directed to techniques for continued data transmission during handover operations. In one embodiment, for example, an apparatus may comprise processing circuitry and computer-readable storage media having stored thereon instructions for execution by the processing circuitry to receive, at a source evolved node B (eNB), a measurement report from a user equipment (UE). The source eNB may send a handover request indicating handover capabilities of the UE to a target eNB. The source eNB may receive a handover acknowledgment from the target eNB, the handover acknowledgement including an uplink grant schedule. The source eNB may send a handover command to the UE, the handover command including the uplink grant schedule. The source eNB may stop a data transmission by the source eNB to the UE based upon an indication that a handover operation is complete. Other embodiments are described and claimed.

Various embodiments may comprise one or more elements. An element may comprise any structure arranged to perform certain operations. Each element may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" or "an embodiment" means that a particular feature, structure, or characteristic described in connection with the embodiment is included in at least one embodiment. The appearances of the phrases "in one embodiment," "in some embodiments," and "in various embodiments" in various places in the specification are not necessarily all referring to the same embodiment.

The techniques disclosed herein may involve transmission of data over one or more wireless connections using one or more wireless mobile broadband technologies. For example, various embodiments may involve transmissions over one or more wireless connections according to one or more 3rd Generation Partnership Project (3GPP), 3GPP Long Term Evolution (LTE), and/or 3GPP LTE-Advanced (LTE-A) technologies and/or standards, including their revisions, progeny and variants. Various embodiments may additionally or alternatively involve transmissions according to one or more Global System for Mobile Communications (GSM)/Enhanced Data Rates for GSM Evolution (EDGE), Universal Mobile Telecommunications System (UMTS)/High Speed Packet Access (HSPA), and/or GSM with General Packet Radio Service (GPRS) system (GSM/GPRS) technologies and/or standards, including their revisions, progeny and variants.

Examples of wireless mobile broadband technologies and/or standards may also include, without limitation, any of the Institute of Electrical and Electronics Engineers (IEEE) 802.16 wireless broadband standards such as IEEE 802.16m and/or 802.16p, International Mobile Telecommunications Advanced (IMT-ADV), Worldwide Interoperability for Microwave Access (WiMAX) and/or WiMAX II, Code Division Multiple Access (CDMA) 2000 (e.g., CDMA2000 1xRTT, CDMA2000 EV-DO, CDMA EV-DV, and so forth), High Performance Radio Metropolitan Area Network (HIPERMAN), Wireless Broadband (WiBro), High Speed Downlink Packet Access (HSDPA), High Speed Orthogonal Frequency-Division Multiplexing (OFDM) Packet Access (HSOPA), High-Speed Uplink Packet Access (HSUPA) technologies and/or standards, including their revisions, progeny and variants.

Some embodiments may additionally or alternatively involve wireless communications according to other wireless communications technologies and/or standards. Examples of other wireless communications technologies and/or standards that may be used in various embodiments may include, without limitation, other IEEE wireless communication standards such as the IEEE 802.11, IEEE 802.11a, IEEE 802.11b, IEEE 802.11g, IEEE 802.11n, IEEE 802.11u, IEEE 802.11ac, IEEE 802.11ad, IEEE 802.11af, and/or IEEE 802.11 ah standards, High-Efficiency Wi-Fi standards developed by the IEEE 802.11 High Efficiency WLAN (HEW) Study Group, Wi-Fi Alliance (WFA) wireless communication standards such as Wi-Fi, Wi-Fi Direct, Wi-Fi Direct Services, Wireless Gigabit (WiGig), WiGig Display Extension (WDE), WiGig Bus Extension (WBE), WiGig Serial Extension (WSE) standards and/or standards developed by the WFA Neighbor Awareness Networking (NAN) Task Group, machine-type communications (MTC) standards such as those embodied in 3GPP Technical Report (TR) 23.887, 3GPP Technical Specification (TS) 22.368, 3GPP TS 36.300, and/or 3GPP TS 23.682, and/or near-field communication (NFC) standards such as standards developed by the NFC Forum, including any revisions, progeny, and/or variants of any of the above. The embodiments are not limited to these examples.

In addition to transmission over one or more wireless connections, the techniques disclosed herein may involve transmission of content over one or more wired connections through one or more wired communications media. Examples of wired communications media may include a wire, cable, metal leads, printed circuit board (PCB), backplane, switch fabric, semiconductor material, twisted-pair wire, co-axial cable, fiber optics, and so forth. The embodiments are not limited in this context.

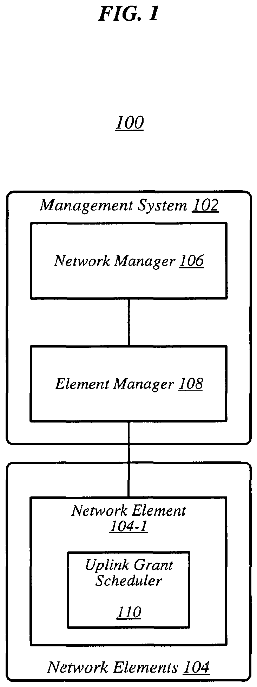

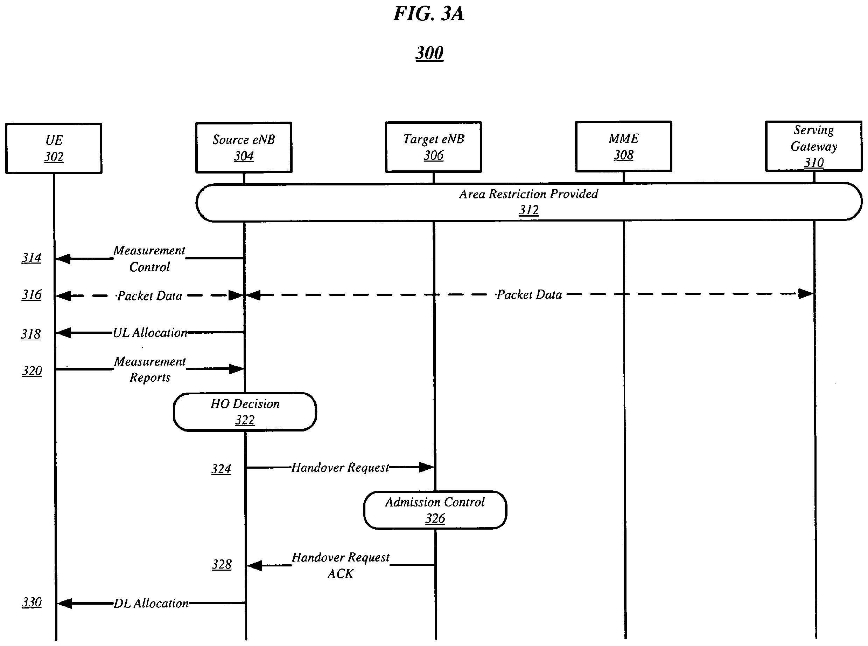

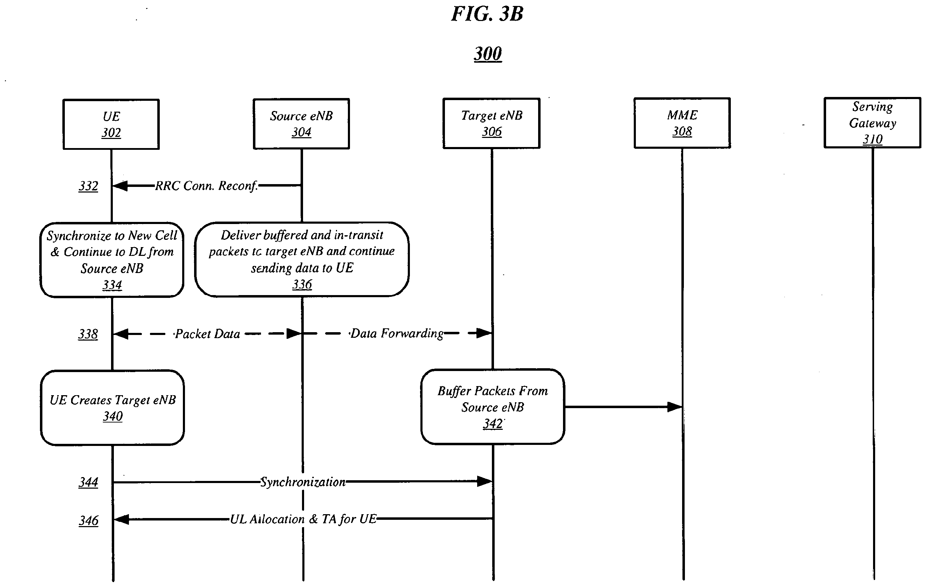

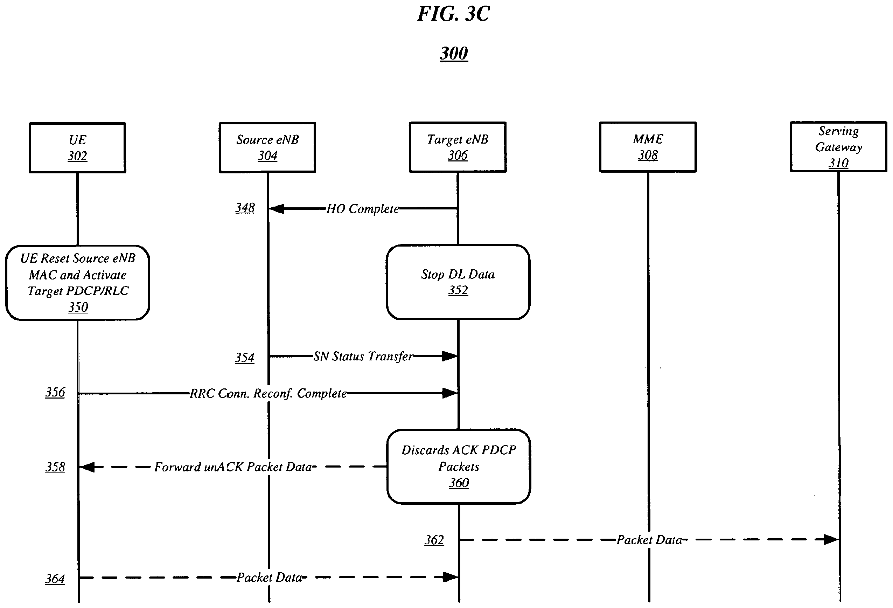

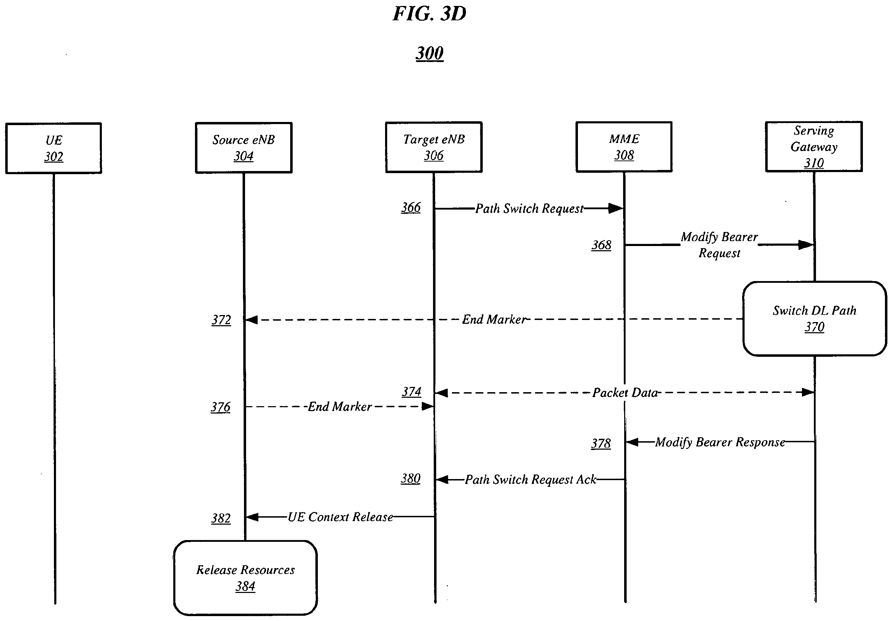

**FIG. 1** illustrates an example of a basic high-level system architecture of a 3GPP network 100 that may be representative of various embodiments. As reflected in FIG. 1, 3GPP network 100 may be implemented by configuring a management system 102 to manage a set of network elements 104. Network elements 104 may generally comprise various types of functional nodes possessing capabilities that collectively enable the provision of mobile services to end users. Examples of network elements 104 may include evolved node Bs (eNBs), mobility management entities (MMEs), serving gateways (GWs), packet data network (PDN) GWs, evolved packet gateways, local GWs, evolved packet data GWs (ePDGs), home subscriber servers (HSSs), 3GPP authentication, authorization, and accounting (AAA) servers, and access network discovery and selection function (ANDSF) entities. In an exemplary embodiment, network element 104-1 may include a target eNB, which may be configured to generate and share an uplink grant schedule according to techniques described herein. The embodiments are not limited to these examples.

Management system 102 may comprise a network manager 106. Network manager 106 may generally comprise an entity responsible for performing high-level oversight/management of the set of network elements 104 in such fashion as to enable 3GPP network 100 to operate appropriately according to established parameters. In some embodiments, network manager 106 may be provided with managerial access to some or all of network elements 104 via one or more element managers 108. Each such element manager 108 may generally comprise an entity that is response for controlling/managing one or more particular network elements among the set of network elements 104 of 3GPP network 100.

In various embodiments, a handover operation between a source eNB and a target eNB, each network elements 104, may be performed. In an example, uplink grant scheduler 110 may be configured to generate an uplink grant schedule that may be communicated from a target eNB to a source eNB, and subsequently from the source eNB to a UE. In some embodiments, the uplink grant schedule may be periodically generated and communicated to the UE. In this manner, the UE may use a first available uplink grant to synchronize with a target eNB, while continuing data transmission during a handover operation.

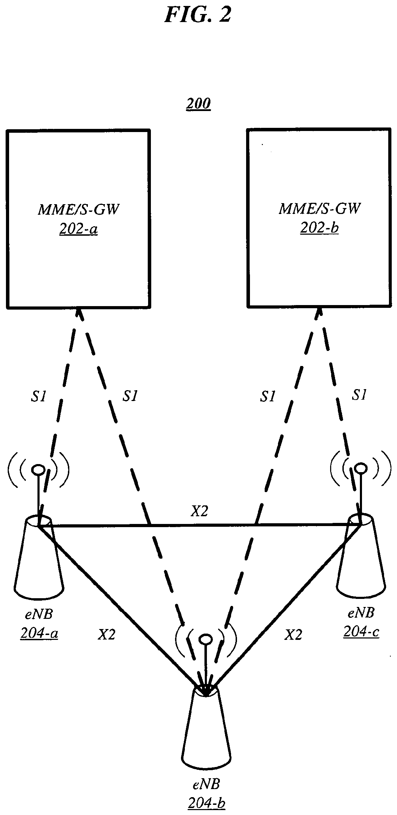

**FIG. 2** illustrates an embodiment of a network architecture 200 according to an embodiment. Network architecture 200 may, in some embodiments, comprise an Evolved UMTS Terrestrial Radio Access Network (E-UTRAN) consisting of eNBs 204*-a-b-c,* which may provide E-UTRA user plane (PDCP/RLC/MAC/PHY) and control plane (RRC) protocol terminations towards one or more UEs. The eNBs 204*-a-b-c* may be interconnected with each other with an X2 interface. The eNBs may also be connected by the S1 interface to the EPC (Evolved Packet Core), more specifically to the MME (Mobility Management Entity) by the S1-MME interface and to the Serving Gateway (S-GW) by the S1-U interface. The S1 interface may support a many-to-many relation between MMEs/Serving Gateways 202-*a*-*b* and eNBs-*a*-*b*-*c*. MME/S-GW 202-*a* and 202-b may be configured for MME selection for handovers with MME change in some embodiments, with the S-GW configured to be the local Mobility Anchor point for inter-eNB handover, packet routing and forwarding, transport level packet marking in the uplink and the downlink, and/or UL and DL charging per UE, PDN, and QCI.

**FIGS. 3A-D** illustrate a communications message flow 300 according to an embodiment. Message flow 300 may illustrate a handover operation for UE 302 from source eNB 304 to target eNB 306 utilizing MME 308 and serving gateway 310. While a particular eNB may be referred to as a "source" or "target" throughout, it can be appreciated that any particular eNB may act as a source or target in a particular handover operation. For example, an eNB may be a source eNB in a first handover operation, and a target eNB in a second handover operation. In some embodiments, message flow 300 may illustrate a RACH-less handover operation in which data is received by the UE until the network provides a UL grant to the UE. Similar techniques may be used during change of SeNB procedures, in addition to the examples described herein. Further, similar techniques may be performed using various interfaces, such as X2, SI, and/or air interfaces.

Turning to **FIG. 3A**, an area restriction may be provided at 312 in which a UE context within the source eNB 304 may contain information regarding roaming and access restrictions which may be provided either at connection establishment or at a last TA update, depending on a particular implementation.

At 314, a measurement control message may be sent from the source eNB 304 to the UE 302 to configure UE measurement procedures according to the roaming and access restriction information and may include available multiple frequency band information. Measurements provided by the source eNB 304 may assist the function controlling the UE 302 connection mobility, for example.

At 316, packet data may be transmitted between UE 302, source eNB 304, and serving gateway 310. The packet data transmitted at 316 may be user data provided by, or sent to, serving gateway 310, and ultimately transmitted between the source eNB 304 and UE 302. At 318, a semi-persistent UL allocation may be performed between the source eNB 304. In some embodiments, UE 302 may monitor the Physical Downlink Control Channel(s) (PDCCH) in order to find possible allocation for uplink transmission when its downlink reception is enabled.

At 320, a measurement report may be triggered at UE 302 and sent to source eNB 304. In some embodiments, measurement reports may be used to enable a scheduler to operate in both uplink and downlink, and measurement reports may include transport volume and measurements of a UE's radio environment. Based upon one or more factors within a measurement report, at 322, a handover decision 322 may be made to hand off the UE to a target eNB 306. The handover decision may also be made based upon radio resource management (RRM) information, in an example.

At 324, source eNB 304 may issues a handover request message to target eNB 306, passing necessary information to prepare the handover at the target side (*e.g.,* UE X2 signaling context reference at source eNB 304, UE S1 EPC signaling context reference, target cell ID, KeNB*, RRC context including the C-RNTI of the UE in the source eNB, AS- configuration, E-RAB context and physical layer ID of the source cell + short MAC-I for possible RLF recovery). UE X2 / UE S1 signaling references may enable the target eNB 306 to address the source eNB 304 and the EPC. In some embodiments, the E-RAB context may include necessary RNL and TNL addressing information, and QoS profiles of the E-RABs.

At 326, admission control may be performed by the target eNB 306 dependent on the received E-RAB QoS information to increase the likelihood of a successful handover, if the resources can be granted by target eNB 306. The target eNB 306 may configure the required resources according to the received E-RAB QoS information and reserves a C-RNTI. In some embodiments, the AS-configuration to be used in the target cell may either be specified independently (*i.e.* an "establishment") or as a delta compared to the AS-configuration used in the source cell (*i.e.* a "reconfiguration").

At 328, the target eNB 306 may prepare a handover operation with L1/L2 and may send a handover request acknowledgment message to the source eNB 304. The handover request acknowledgment message may include a transparent container to be sent to the UE 302 as an RRC message to perform the handover. The container may include a new C-RNTI, target eNB security algorithm identifiers for the selected security algorithms, a dedicated RACH preamble, and possibly some other parameters *i.e.* access parameters, SIBs, etc. in some embodiments. If RACH-less HO is configured, the container may include a timing adjustment indication and an optional pre-allocated uplink grant schedule. The handover request acknowledgement message may also include RNL/TNL information for the forwarding tunnels, if necessary. As soon as the source eNB 304 receives the handover request acknowledgment message, or as soon as the transmission of the handover command is initiated in the downlink, data forwarding may be initiated and downlink allocation may take place between the source eNB 304 and UE 302 at 330.

Turning to **FIG. 3B****,** at 332, a RRC connection reconfiguration (RRCConnectionReconfiguration) message may be generated by target eNB 306 to perform the handover. The RRCConnectionReconfiguration message may include mobilityControlInformation to be sent by the source eNB 304 towards the UE 302. The source eNB 304 may perform the necessary integrity protection and ciphering of the message, in some embodiments. In an example, the UE 302 may receive the RRCConnectionReconfiguration message with parameters, such as new C-RNTI, target eNB security algorithm identifiers, optionally dedicated RACH preamble, and/or target eNB SIBs. UE 302 may be commanded by the source eNB 304 to perform the handover. If RACH-less handover is configured, the RRCConnectionReconfiguration message may include timing adjustment indication and optional pre-allocated uplink grant for accessing the target eNB 306. If a pre-allocated uplink grant is not included within the RRCConnectionReconfiguration message, the UE 302 may be configured to monitor a PDCCH of the target eNB 306 to receive an uplink grant. In some embodiments, the UE 302 may not need to delay the handover execution for delivering the HARQ/ARQ responses to source eNB 304.

Included mobilityControlInformation may include one or more of the following exemplary fields:

**TABLE 1**

| ***additionalSpectrumEmission*** |
|---|
| For a UE with no SCells configured for UL in the same band as the PCell, the UE shall apply the value for the PCell instead of the corresponding value from *SystemInformationBlockType2* or *SystemInformationBlockType1.* For a UE with SCell(s) configured for UL in the same band as the PCell, the UE shall, in case all SCells configured for UL in that band are released after handover completion, apply the value for the PCell instead of the corresponding value from *SystemInformationBlockType2* or *SystemInformationBlockType1.* The UE requirements related to IE *AdditionalSpectrumEmission* are defined in TS 36.101 [42, table 6.2.4-1]. |

| ***carrierBandwidth*** |
|---|
| Provides the parameters *Downlink bandwidth,* and *Uplink bandwidth,* see TS 36.101 [42]. |

| ***carrierFreq*** |
|---|
| Provides the EARFCN to be used by the UE in the target cell. |

| ***cipheringAlgorithmSCG*** |
|---|
| Indicates the ciphering algorithm to be used for SCG DRBs. E-UTRAN includes the field upon SCG change when one or more SCG DRBs are configured. Otherwise E-UTRAN does not include the field. |

| ***dl-Bandwidth*** |
|---|
| Parameter: *Downlink bandwidth,* see TS 36.101 [42]. |

| ***drb-ContinueROHC*** |
|---|
| This field indicates whether to continue or reset, for this handover, the header compression protocol context for the RLC UM bearers configured with the header compression protocol. Presence of the field indicates that the header compression protocol context continues while absence indicates that the header compression protocol context is reset. E-UTRAN includes the field only in case of a handover within the same eNB. |

| ***makeBeforeBreak*** |
|---|
| Indicates whether the UE shall continue uplink transmission/ downlink reception with the source cell(s) before performing the first transmission through PRACH to the target PCell, or through PUSCH to the target PCell while *rach-Skip* is configured. |

| ***makeBeforeBreakSCG*** |
|---|
| Indicates whether the UE shall continue uplink transmission/ downlink reception with the source cell(s) before performing the first transmission through PRACH to the target PSCell, or through PUSCH to the target PSCell while *rach-SkipSCG* is configured. |

| ***mobility ControlInfo V2X*** |
|---|
| Indicates the sidelink configurations of the target cell for V2X sidelink communication during handover. |

| ***numberOfConfUL-Processes*** |
|---|
| The number of configured HARQ processes for preallocated uplink grant, see TS 36.321 [6, 5.x]. |

| ***rach-ConfigDedicated*** |
|---|
| The dedicated random access parameters. If absent the UE applies contention based random access as specified in TS 36.321 [6]. |

| ***rach-Skip*** |
|---|
| This field indicates whether random access procedure for the target PCell is skipped. |

| ***rach-SkipSCG*** |
|---|
| This field indicates whether random access procedure for the target PSCell is skipped. |

| ***targetTA*** |
|---|
| This field refers to the timing adjustment indication, see TS 36.213 [23], indicating the N_{TA} value which the UE shall use for the target PTAG of handover or the target PSTAG of SCG change. *ta0* corresponds to N_{TA}=0. *ptag* correponds to the latest N_{TA} value of the source PTAG. *pstag* correponds to the latest N_{TA} value of the source PSTAG. *mcg-STAG* correponds to the latest N_{TA} value of a MCG STAG indicated by the STAG-Id. *scg-STAG* correponds to the latest N_{TA} value of a SCG STAG indicated by the STAG-Id. |

| ***t304*** |
|---|
| Timer T304 as described in section 7.3. ms50 corresponds with 50 ms, ms100 corresponds with 100 ms and so on. EUTRAN includes extended value *ms10000-v1310* only when UE supports CE. |

| ***t307*** |
|---|
| Timer T307 as described in section 7.3. ms50 corresponds with 50 ms, ms100 corresponds with 100 ms and so on. |

| ***ul-Bandwidth*** |
|---|
| Parameter: *Uplink bandwidth,* see TS 36.101 [42, table 5.6-1]. For TDD, the parameter is absent and it is equal to downlink bandwidth. If absent for FDD, apply the same value as applies for the downlink bandwidth. |

| ***ul-Grant*** |
|---|
| Indicates the resources of the target PCell/PSCell to be used for the uplink transmission of PUSCH [23, 8.x]. |

| ***ul-SchedInterval*** |
|---|
| Indicates the scheduling interval in uplink, see TS 36.321 [6, 5.x]. Value in number of sub-frames. Value sf1 corresponds to 1 sub-frame, sf2 corresponds to 2 sub-frames and so on. |

| ***ul-SubframeStart*** |
|---|
| Indicates the subframe in which the UE may initiate the uplink transmission, see TS 36.321 [6, 5.x]. Value 0 corresponds to subframe number 0, 1 correponds to subframe number 1 and so on. The subframe indicating a valid uplink grant according to the calculation of UL grant configured by *ul-SubframeStart* and *ul-SchedInterval,* see TS 36.321 [6, 5.x], is the same across all radio frames. |

| ***v2x-CommRxPool*** |
|---|
| Indicates reception pools for receiving V2X sidelink communication during handover. |

| ***v2x-CommSync Config*** |
|---|
| Indicates synchronization configurations for performing V2X sidelink communication during handover. |

| ***v2x-CommTxPoolExceptional*** |
|---|
| Indicates the transmission resources by which the UE is allowed to transmit V2X sidelink communication during handover. |

In some embodiments, when Make-Before-Break handover is configured, a connection between UE 302 and source eNB 304 may be maintained after the reception of RRCConnectionReconfiguration message with mobilityControlInformation before the UE 302 executes initial uplink transmission to the target eNB 306. If Make-Before-Break handover is configured, the source eNB 304 may be responsible for deciding when to stop transmitting to the UE 302. In some embodiments, UE 302 may be configured with Make-Before-Break handover and RACH-less handover simultaneously. In this manner, UE 302 may synchronize to a new cell and continue to downlink from source eNB 304 at 334, and source eNB 304 may be configured to deliver buffered and in-transit packets to target eNB and continue sending data to UE 302 at 336. Thus, at 338 packet data and data forwarding may continue during a handover procedure, as UE creates a target eNB 306 at 340, buffers packets from source eNB 304 at 342 and performs synchronization with target eNB 306 at 344, as follows.

In an embodiment, if RACH-less handover is not configured, after receiving the RRCConnectionReconfiguration message including the mobilityControlInformation, UE 302 may perform synchronization to target eNB 306 and accesses the target cell, via RACH, following a contention-free procedure if a dedicated RACH preamble was indicated in the mobilityControlInformation, or following a contention-based procedure if no dedicated preamble was indicated. In some cases, UE 302 may derive target eNB 306 specific keys and configure the selected security algorithms to be used in the target cell.

In an embodiment in which RACH-less handover is configured, UE 302 may perform synchronization to target eNB 306. UE 302 may derive target eNB 306 specific keys and configure the selected security algoritms to be used in the target cell.

At 346, UL allocation and TA for UE 346 may be performed. If RACH-less handover is not configured, the target eNB 306 may respond with UL allocation and timing advance. If RACH-less handover is configured and the UE did not get the periodic pre-allocated uplink grant in the RRCConnectionReconfiguration message including the mobilityControlInfo, the UE 302 may receive an uplink grant via the PDCCH of the target cell. The UE 302 may use the first available uplink grant after synchronization to the target cell, in some embodiments.

Turning to **FIG. 3C****,** at 348, target eNB 306 may send a handover complete message to source eNB 304, at which point UE 302 may, at 350, reset source eNB MAC and activate target PDCP/RLC. At 352, target eNB 306 may stop DL data, and then receive from source eNB 304 an SN transfer status message at 354.

At 356, a RRC connection reconfiguration complete message may be sent from UE 302 to target eNB 306 when the UE 302 has successfully accessed the target cell or, when RACH-less HO is configured, received an uplink grant. The UE 302 may send the RRCConnectionReconfigurationComplete message (C-RNTI) to confirm the handover, along with an uplink Buffer Status Report, whenever possible, to the target eNB 306 to indicate that the handover procedure is completed for the UE 302. The target eNB 306 may verify the C-RNTI sent in the RRCConnectionReconfigurationComplete message, forward unACK packet data to UE 302 at 358, discards ACK PDCP packets at 360, and may begin communicating data to the UE 302 at 362 and 364.

Turning to **FIG. 3D****,** at 366, the target eNB 306 may send a path switch request to MME 308 informing MME 308 that UE 302 has changed cells. In turn, MME 308 may send serving gateway 310 a modify bearer request message at 368. At 370, the serving gateway 310 may switch the downlink data path to the target side. Further, in some embodiments, the serving gateway 310 may send one or more "end marker" packets at 372 on the old path to the source eNB 304 and then may release any U-plane/TNL resources towards the source eNB 304. Packet data 374 may then be exchanged between serving gateway 310 and target eNB 306, and "end marker" packets may be sent from source eNB 304 to target eNB 306 at 376.

In an embodiment, at 378, a modify bearer response message may be sent from serving gateway 310 to MME 308, at which point, MME 308 may send a path switch request acknowledgment to target eNB 306 at 380, which may confirm the path switch request message that was previously sent at 366. Target eNB 306 may then, at 382, send a UE context release message to source eNB 304, informing source eNB 304 of a successful handover operation, which in turn triggers release of resources at source eNB 304 at 384.

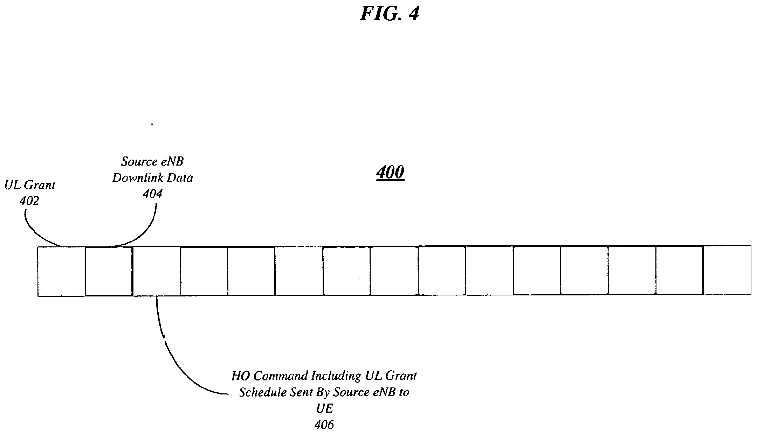

**FIG. 4** illustrates a data stream 400 according to an embodiment. In an embodiment, data stream 400 may include a UL grant 402, source eNB downlink data 404, and a HO command including a UL grant schedule sent by a source eNB to a UE 406. In an embodiment, data may not be sent or received during a time slot associated with the UL grant 402. However, in other embodiments, this time slot may be used for data transfer, for example, when the UL grant 402 is not being used by a UE. The UL grant schedule may be forwarded by the target eNB to the source eNB and then forwarded to the UE. Since the source eNB also has access the UL grant schedule using this technique, the source eNB may be configured to skip sending data in the UL grant slot. Thus, the UE may use the first available UL grant to synchronize with the target eNB once the UE is ready for handover. In this manner, the UE may receive continuous data from the source eNB until handover, and synchronization of data during a handover procedure may be minimize or eliminated.

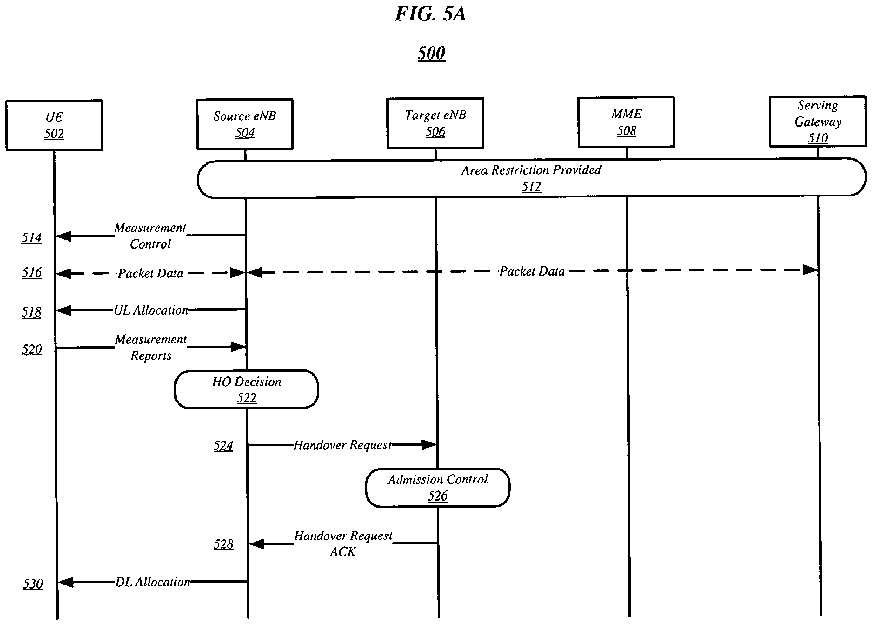

**FIGS. 5A-D** illustrate a communications message flow 500 according to an embodiment. Message flow 500 may illustrate a handover operation for UE 502 from source eNB 504 to target eNB 506 utilizing MME 508 and serving gateway 510. While a particular eNB may be referred to as a "source" or "target" throughout, it can be appreciated that any particular eNB may act as a source or target in a particular handover operation. For example, an eNB may be a source eNB in a first handover operation, and a target eNB in a second handover operation. In some embodiments, message flow 500 may illustrate a RACH-less handover operation in which data is received by the UE until the network provides a UL grant to the UE. Similar techniques may be used during change of SeNB procedures, in addition to the examples described herein. Further, similar techniques may be performed using various interfaces, such as X2, SI, and/or air interfaces.

Turning to **FIG. 5A****,** an area restriction may be provided at 512 in which a UE context within the source eNB 504 may contain information regarding roaming and access restrictions which may be provided either at connection establishment or at a last TA update, depending on a particular implementation.

At 514, a measurement control message may be sent from the source eNB 504 to the UE 502 to configure UE measurement procedures according to the roaming and access restriction information and may include available multiple frequency band information. Measurements provided by the source eNB 504 may assist the function controlling the UE 502 connection mobility, for example.

At 516, packet data may be transmitted between UE 502, source eNB 504, and serving gateway 510. The packet data transmitted at 516 may be user data provided by, or sent to, serving gateway 510, and ultimately transmitted between the source eNB 504 and UE 302. At 518, a semi-persistent UL allocation may be performed between the source eNB 504. In some embodiments, UE 502 may monitor the Physical Downlink Control Channel(s) (PDCCH) in order to find possible allocation for uplink transmission when its downlink reception is enabled.

At 520, a measurement report may be triggered at UE 502 and sent to source eNB 504. In some embodiments, measurement reports may be used to enable a scheduler to operate in both uplink and downlink, and measurement reports may include transport volume and measurements of a UE's radio environment. Based upon one or more factors within a measurement report, at 522, a handover decision 522 may be made to hand off the UE to a target eNB 506. The handover decision may also be made based upon radio resource management (RRM) information.

At 524, source eNB 504 may issues a handover request message to target eNB 506, passing necessary information to prepare the handover at the target side (*e.g.,* UE X2 signaling context reference at source eNB 504, UE S1 EPC signaling context reference, target cell ID, KeNB*, RRC context including the C-RNTI of the UE in the source eNB, AS- configuration, E-RAB context and physical layer ID of the source cell + short MAC-I for possible RLF recovery). UE X2 / UE S1 signaling references may enable the target eNB 506 to address the source eNB 504 and the EPC. In some embodiments, the E-RAB context may include necessary RNL and TNL addressing information, and QoS profiles of the E-RABs.

At 526, admission control may be performed by the target eNB 506 dependent on the received E-RAB QoS information to increase the likelihood of a successful handover, if the resources can be granted by target eNB 506. The target eNB 506 may configure the required resources according to the received E-RAB QoS information and reserves a C-RNTI. In some embodiments, the AS-configuration to be used in the target cell may either be specified independently (i.e. an "establishment") or as a delta compared to the AS-configuration used in the source cell (i.e. a "reconfiguration").

At 528, the target eNB 506 may prepare a handover operation with L1/L2 and may send a handover request acknowledgment message to the source eNB 504. The handover request acknowledgment message may include a transparent container to be sent to the UE 502 as an RRC message to perform the handover. The container may include a new C-RNTI, target eNB security algorithm identifiers for the selected security algorithms, a dedicated RACH preamble, and possibly some other parameters *i.e.* access parameters, SIBs, etc. in some embodiments. If RACH-less HO is configured, the container may include a timing adjustment indication and an optional pre-allocated uplink grant schedule. The handover request acknowledgement message may also include RNL/TNL information for the forwarding tunnels, if necessary. As soon as the source eNB 504 receives the handover request acknowledgment message, or as soon as the transmission of the handover command is initiated in the downlink, data forwarding may be initiated and downlink allocation may take place between the source eNB 504 and UE 502 at 530.

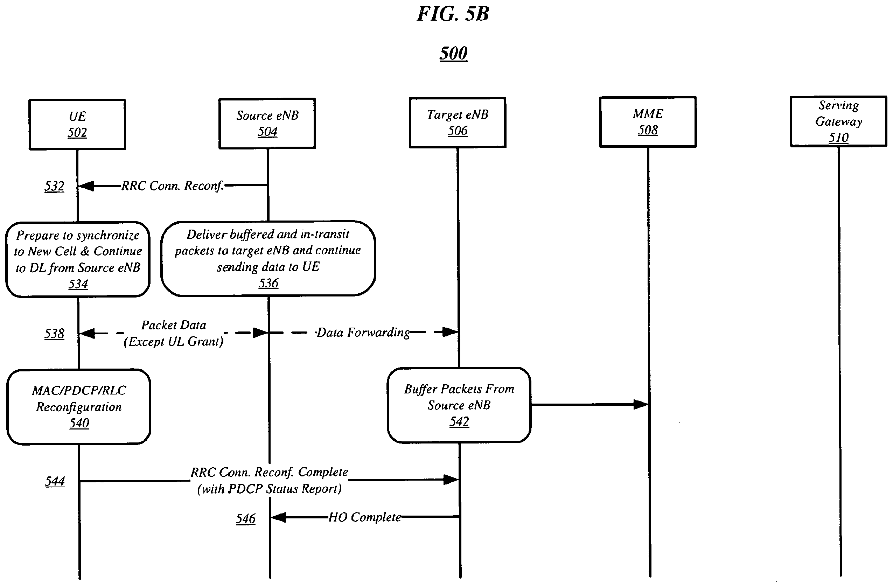

Turning to **FIG. 5B****,** at 532, a RRC connection reconfiguration (RRCConnectionReconfiguration) message may be generated by source eNB 504 to perform the handover. The RRCConnectionReconfiguration message may include mobilityControlInformation to be sent by the source eNB 504 towards the UE 502. The source eNB 504 may perform the necessary integrity protection and ciphering of the message, in some embodiments. In an example, the UE 502 may receive the RRCConnectionReconfiguration message with parameters, such as new C-RNTI, target eNB security algorithm identifiers, optionally dedicated RACH preamble, and/or target eNB SIBs. UE 502 may be commanded by the source eNB 504 to perform the handover. If RACH-less handover is configured, the RRCConnectionReconfiguration message may include timing adjustment indication and optional pre-allocated uplink grant for accessing the target eNB 506. If a pre-allocated uplink grant is not included within the RRCConnectionReconfiguration message, the UE 502 may be configured to monitor a PDCCH of the target eNB 506 to receive an uplink grant. In some embodiments, the UE 502 may not need to delay the handover execution for delivering the HARQ/ARQ responses to source eNB 504.

In some embodiments, when Make-Before-Break handover is configured, a connection between UE 502 and source eNB 504 may be maintained after the reception of RRCConnectionReconfiguration message with mobilityControlInformation before the UE 502 executes initial uplink transmission to the target eNB 506. If Make-Before-Break handover is configured, the source eNB 504 may be responsible for deciding when to stop transmitting to the UE 502. In some embodiments, UE 502 may be configured with Make-Before-Break handover and RACH-less handover simultaneously. In this manner, UE 502 may prepare to synchronize to a new cell and continue to downlink from source eNB 504 at 534, and source eNB 504 may be configured to deliver buffered and in-transit packets to target eNB and continue sending data to UE 502 at 536. Thus, at 538 packet data and data forwarding may continue during a handover procedure. In some embodiments, as discussed above with respect to FIG. 4, packet data may not be transmitted during UL grant slots.

UE 502 may create a target eNB 506 at 540 and buffers packets from source eNB 504 at 542. At 544, a RRC connection reconfiguration complete message may be sent from UE 502 to target eNB 506 when the UE 502 has successfully accessed the target cell or, when RACH-less HO is configured, received an uplink grant. The UE 502 may send the RRCConnectionReconfigurationComplete message (C-RNTI) to confirm the handover, along with an uplink Buffer Status Report, whenever possible, and a PDCP status report, to the target eNB 506 to indicate that the handover procedure is completed for the UE 502. At 546, target eNB 506 may send a handover complete message to source eNB 504.

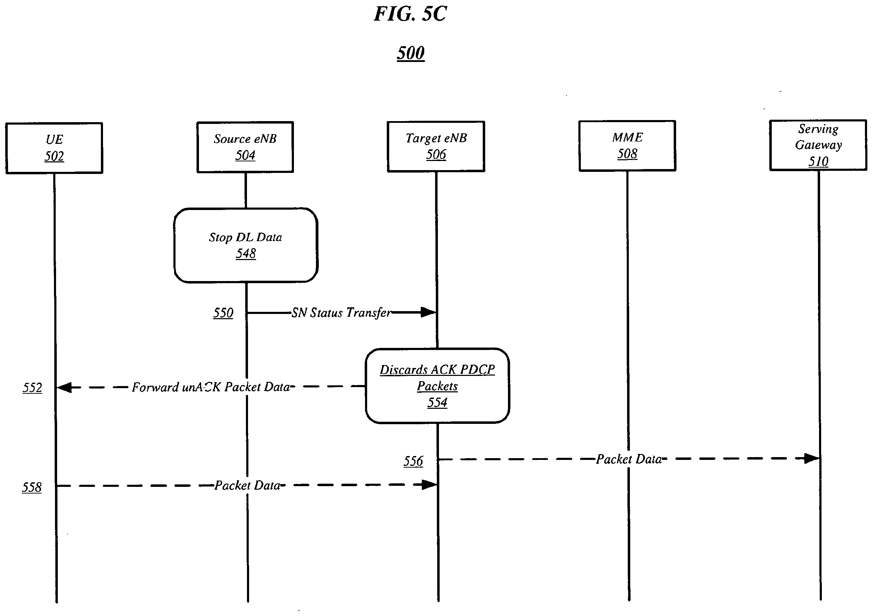

Turning to **FIG. 5C****,** at 548, target eNB 406 may stop DL data, and then receive from source eNB 404 an SN transfer status message at 550. The target eNB 506 may verify the C-RNTI sent in the RRCConnectionReconfigurationComplete message, forward unACK packet data to UE 502 at 552, discard ACK PDCP packets at 554, and may begin communicating data to the UE 502 at 556 and 558.

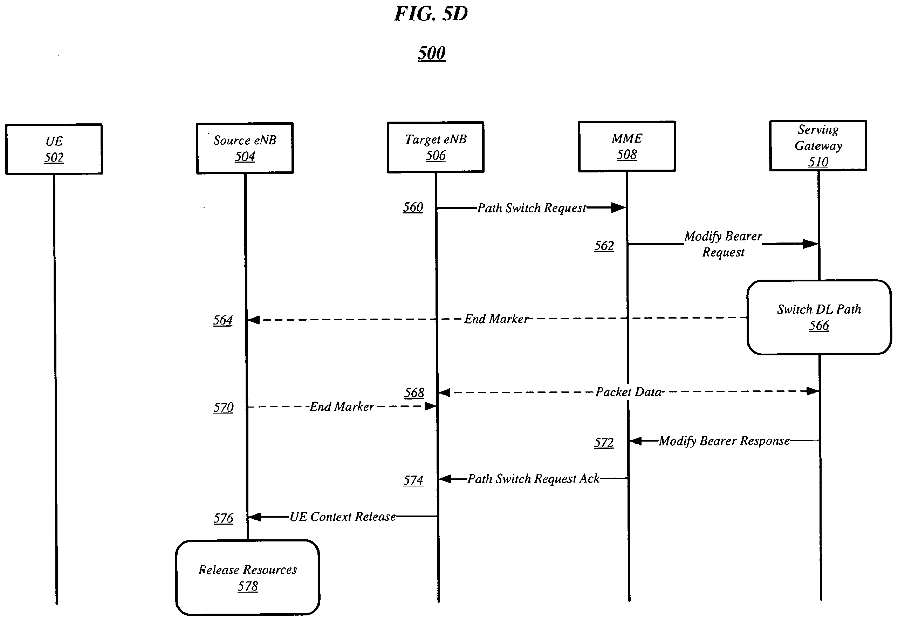

Turning to **FIG. 5D****,** at 560, the target eNB 506 may send a path switch request to MME 508 informing MME 508 that UE 502 has changed cells. In turn, MME 508 may send serving gateway 510 a modify bearer request message at 562. At 566, the serving gateway 510 may switch the downlink data path to the target side. Further, in some embodiments, the serving gateway 510 may send one or more "end marker" packets at 564 on the old path to the source eNB 504 and then may release any U-plane/TNL resources towards the source eNB 504. Packet data 568 may then be exchanged between serving gateway 510 and target eNB 506, and "end marker" packets may be sent from source eNB 504 to target eNB 506 at 570.

In an embodiment, at 572, a modify bearer response message may be sent from serving gateway 510 to MME 508, at which point, MME 508 may send a path switch request acknowledgment to target eNB 506 at 574, which may confirm the path switch request message that was previously sent at 566. Target eNB 506 may then, at 576, send a UE context release message to source eNB 504, informing source eNB 504 of a successful handover operation, which in turn triggers release of resources at source eNB 504 at 578.

Operations for the above embodiments may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof. The embodiments are not limited in this context.

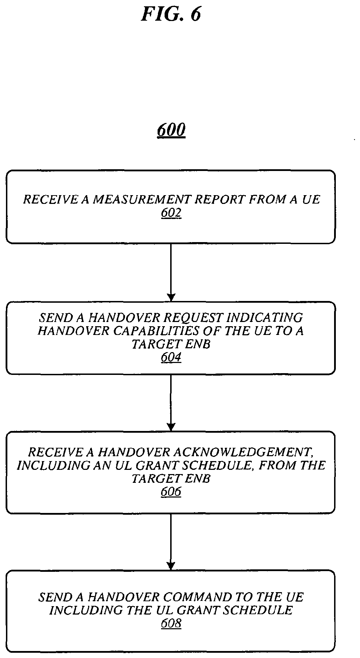

**FIG. 6** illustrates an embodiment of a logic flow 600 according to an embodiment. At 602, a source eNB may receive a measurement report from a UE. In some embodiments, measurement reports may be used to enable a scheduler to operate in both uplink and downlink, and measurement reports may include transport volume and measurements of a UE's radio environment. Based upon one or more factors within a measurement report, a handover decision may be made to hand off the UE to a target eNB. The handover decision may also be made based upon radio resource management (RRM) information.

At 604, the source eNB may send a handover request indicating handover capabilities of the UE to a target eNB. In some embodiments, the handover request may be sent over an X2 interface to the target eNB. Specifically, in some embodiments, handover capabilities may include the capability to perform a RACH-less handover and/or a Make-Before-Break according to the techniques described herein. The handover request may include necessary information to prepare the handover at the target side (e.g., UE X2 signaling context reference at source eNB, UE S1 EPC signaling context reference, target cell ID, KeNB*, RRC context including the C-RNTI of the UE in the source eNB, AS- configuration, E-RAB context and physical layer ID of the source cell + short MAC-I for possible RLF recovery).

At 606, the source eNB may receive a handover acknowledgement, including an UL grant schedule, from a target eNB. A target eNB may prepare for handover by sending a handover request acknowledgment message to the source eNB, which may include an identification as RACH-less and/or a Make-Before-Break indication, and may be received via an x2 interface from the target eNB. The handover request acknowledgment message may include a transparent container to be sent to the UE as an RRC message to perform the handover. The container may include a new C-RNTI, target eNB security algorithm identifiers for the selected security algorithms, a dedicated RACH preamble, and possibly some other parameters *i.e.* access parameters, SIBs, etc. in some embodiments. If RACH-less HO is configured, the container may include a timing adjustment indication and an optional pre-allocated uplink grant schedule. The handover request acknowledgement message may also include RNL/TNL information for the forwarding tunnels, if necessary. As soon as the source eNB receives the handover request acknowledgment message, or as soon as the transmission of the handover command is initiated in the downlink, data forwarding may be initiated and downlink allocation may take place between the source eNB and UE.

At 608, the source eNB may send a handover command to the UE including the UL grant schedule. A RRC connection reconfiguration (RRCConnectionReconfiguration) message may be generated by the target eNB to perform the handover. The RRCConnectionReconfiguration message may include mobilityControlInformation to be sent by the source eNB towards the UE. The source eNB may perform the necessary integrity protection and ciphering of the message, in some embodiments. If RACH-less handover is configured, the RRCConnectionReconfiguration message may include timing adjustment indication and optional pre-allocated uplink grant for accessing the target eNB. If a pre-allocated uplink grant is not included within the RRCConnectionReconfiguration message, the UE may be configured to monitor a PDCCH of the target eNB to receive an uplink grant.

In some embodiments, when Make-Before-Break handover is configured, a connection between UE and source eNB may be maintained after the reception of RRCConnectionReconfiguration message with mobilityControlInformation before the UE executes initial uplink transmission to the target eNB. If Make-Before-Break handover is configured, the source eNB may be responsible for deciding when to stop transmitting to the UE. In some embodiments, UE may be configured with Make-Before-Break handover and RACH-less handover simultaneously. In this manner, UE may prepare to synchronize to a new cell and continue to downlink from source eNB, and source eNB 504 may be configured to deliver buffered and in-transit packets to target eNB and continue sending data to the UE. Thus, packet data and data forwarding may continue during a handover procedure. In some embodiments, as discussed above with respect to FIG. 4, packet data may not be transmitted during UL grant slots.

Once a handover operation is complete, a source eNB may be configured to stop data transmission to a UE. In an embodiment, the source eNB may stop a data transmission to the UE based upon a handover complete message from the target eNB. the handover complete message may be received from the target eNB after the target eNB receives a RRC reconfiguration complete message in the UL grant from the UE. Alternatively, the handover complete message may be received from the target eNB after the target eNB receives a RRC reconfiguration complete message in a PDCP status report from the UE. In another embodiment,

The source eNB may stop a data transmission the UE based upon a determination by the source eNB that the UE has completed the handover, for example, a lack of data traffic to/from the UE or unresponsive UE within a time period, which may be pre-defined. In an embodiment, the source eNB may stop data transmission to the UE after the UE starts tuning its RF to connect to the target eNB during the first uplink grant in the uplink grant schedule, for example.

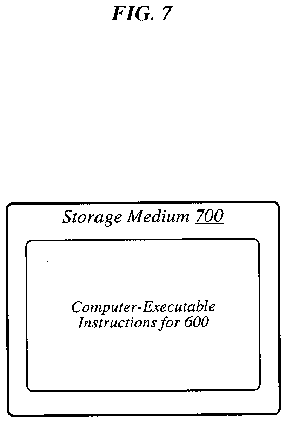

**FIG. 7** illustrates an embodiment of a storage medium 700. Storage medium 700 may comprise any computer-readable storage medium or machine-readable storage medium, such as an optical, magnetic or semiconductor storage medium. In some embodiments, storage medium 700 may comprise a non-transitory storage medium. In various embodiments, storage medium 700 may comprise an article of manufacture. In some embodiments, storage medium 700 may store computer-executable instructions, such as computer-executable instructions to implement one or more of communication message flows 3A-D, 5A-D, and logic flow 600. Examples of a computer-readable storage medium or machine-readable storage medium may include any tangible media capable of storing electronic data, including volatile memory or non-volatile memory, removable or non-removable memory, erasable or non-erasable memory, writeable or re-writeable memory, and so forth. Examples of computer-executable instructions may include any suitable type of code, such as source code, compiled code, interpreted code, executable code, static code, dynamic code, object-oriented code, visual code, and the like. The embodiments are not limited to these examples.

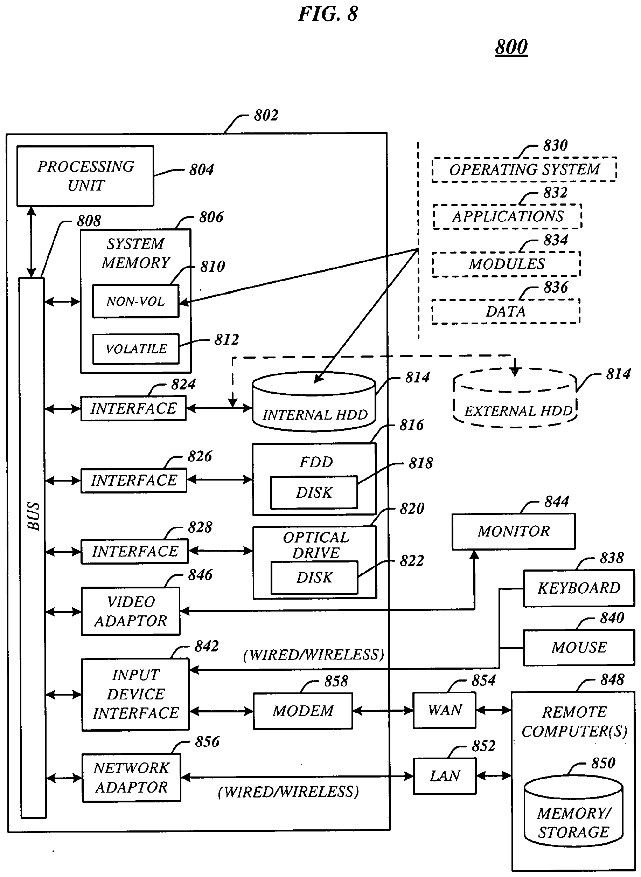

**FIG. 8** illustrates an embodiment of an exemplary computing architecture 800 that may be suitable for implementing various embodiments as previously described. In various embodiments, the computing architecture 800 may comprise or be implemented as part of an electronic device. In some embodiments, the computing architecture 800 may be representative, for example, of a computing device suitable for use in conjunction with implementation of one or more of messages flows 300, 500, and/or logic flow 600. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 800. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 800 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 800.

As shown in FIG. 8, according to computing architecture 800, a computer 800 comprises a processing unit 804, a system memory 806 and a system bus 808. In some embodiments, computer 802 may comprise a server. In some embodiments, computer 802 may comprise a client. The processing unit 804 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Itanium®, Pentium®, Xeon®, and XScale® processors; and similar processors. Dual microprocessors, multi-core processors, and other multi-processor architectures may also be employed as the processing unit 804.

The system bus 808 provides an interface for system components including, but not limited to, the system memory 806 to the processing unit 804. The system bus 808 can be any of several types of bus structure that may further interconnect to a memory bus (with or without a memory controller), a peripheral bus, and a local bus using any of a variety of commercially available bus architectures. Interface adapters may connect to the system bus 808 via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The system memory 806 may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 8, the system memory 806 can include non-volatile memory 810 and/or volatile memory 812. A basic input/output system (BIOS) can be stored in the non-volatile memory 810.

The computer 802 may include various types of computer-readable storage media in the form of one or more lower speed memory units, including an internal (or external) hard disk drive (HDD) 814, a magnetic floppy disk drive (FDD) 816 to read from or write to a removable magnetic disk 818, and an optical disk drive 820 to read from or write to a removable optical disk 822 (e.g., a CD-ROM or DVD). The HDD 814, FDD 816 and optical disk drive 820 can be connected to the system bus 808 by a HDD interface 824, an FDD interface 826 and an optical drive interface 828, respectively. The HDD interface 824 for external drive implementations can include at least one or both of Universal Serial Bus (USB) and IEEE 1394 interface technologies.

The drives and associated computer-readable media provide volatile and/or nonvolatile storage of data, data structures, computer-executable instructions, and so forth. For example, a number of program modules can be stored in the drives and memory units 810, 812, including an operating system 830, one or more application programs 832, other program modules 834, and program data 836.

A user can enter commands and information into the computer 802 through one or more wire/wireless input devices, for example, a keyboard 838 and a pointing device, such as a mouse 840. Other input devices may include microphones, infra-red (IR) remote controls, radiofrequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit 804 through an input device interface 842 that is coupled to the system bus 808, but can be connected by other interfaces such as a parallel port, IEEE 1394 serial port, a game port, a USB port, an IR interface, and so forth.

A monitor 844 or other type of display device is also connected to the system bus 808 via an interface, such as a video adaptor 846. The monitor 844 may be internal or external to the computer 802. In addition to the monitor 844, a computer typically includes other peripheral output devices, such as speakers, printers, and so forth.

The computer 802 may operate in a networked environment using logical connections via wire and/or wireless communications to one or more remote computers, such as a remote computer 848. The remote computer 848 can be a workstation, a server computer, a router, a personal computer, portable computer, microprocessor-based entertainment appliance, a peer device or other common network node, and typically includes many or all of the elements described relative to the computer 802, although, for purposes of brevity, only a memory/storage device 850 is illustrated. The logical connections depicted include wire/wireless connectivity to a local area network (LAN) 852 and/or larger networks, for example, a wide area network (WAN) 854. Such LAN and WAN networking environments are commonplace in offices and companies, and facilitate enterprise-wide computer networks, such as intranets, all of which may connect to a global communications network, for example, the Internet.

When used in a LAN networking environment, the computer 802 is connected to the LAN 852 through a wire and/or wireless communication network interface or adaptor 856. The adaptor 856 can facilitate wire and/or wireless communications to the LAN 852, which may also include a wireless access point disposed thereon for communicating with the wireless functionality of the adaptor 856.

When used in a WAN networking environment, the computer 802 can include a modem 858, or is connected to a communications server on the WAN 854, or has other means for establishing communications over the WAN 854, such as by way of the Internet. The modem 858, which can be internal or external and a wire and/or wireless device, connects to the system bus 808 via the input device interface 842. In a networked environment, program modules depicted relative to the computer 802, or portions thereof, can be stored in the remote memory/storage device 850. It will be appreciated that the network connections shown are exemplary and other means of establishing a communications link between the computers can be used.

The computer 802 is operable to communicate with wire and wireless devices or entities using the IEEE 802 family of standards, such as wireless devices operatively disposed in wireless communication (e.g., IEEE 802.16 over-the-air modulation techniques). This includes at least Wi-Fi (or Wireless Fidelity), WiMax, and Bluetooth™ wireless technologies, among others. Thus, the communication can be a predefined structure as with a conventional network or simply an ad hoc communication between at least two devices. Wi-Fi networks use radio technologies called IEEE 802.11x (a, b, g, n, etc.) to provide secure, reliable, fast wireless connectivity. A Wi-Fi network can be used to connect computers to each other, to the Internet, and to wire networks (which use IEEE 802.3-related media and functions).

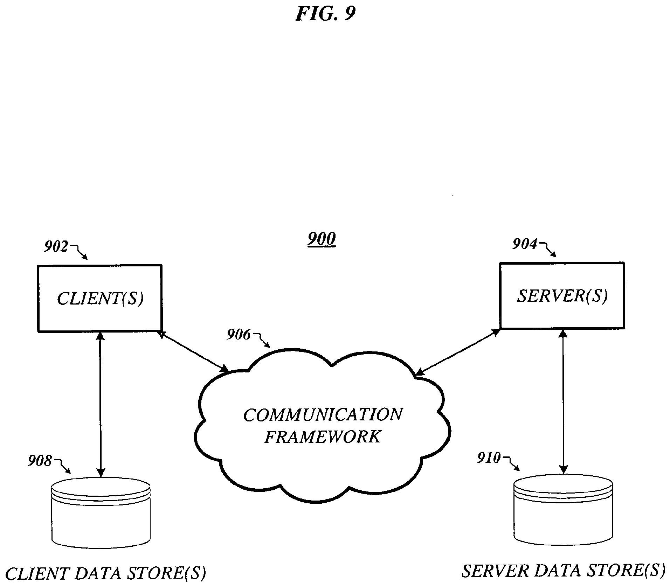

**FIG. 9** illustrates a block diagram of an exemplary communications architecture 900 suitable for implementing various embodiments as previously described. The communications architecture 900 includes various common communications elements, such as a transmitter, receiver, transceiver, radio, network interface, baseband processor, antenna, amplifiers, filters, power supplies, and so forth. The embodiments, however, are not limited to implementation by the communications architecture 900.

As shown in FIG. 9, the communications architecture 900 comprises includes one or more clients 902 and servers 904. The clients 902 and the servers 904 are operatively connected to one or more respective client data stores 908 and server data stores 910 that can be employed to store information local to the respective clients 902 and servers 904, such as cookies and/or associated contextual information. Any one of clients 902 and/or servers 904 may implement one or more of network manager 106, element manager 108, message flows 300, 500, and/or logic flow 600.

The clients 902 and the servers 904 may communicate information between each other using a communication framework 906. The communications framework 906 may implement any well-known communications techniques and protocols. The communications framework 906 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

The communications framework 906 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/100/1000 Base T, and the like), token ring, wireless network interfaces, cellular network interfaces, IEEE 802.11a-x network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. Should processing requirements dictate a greater amount speed and capacity, distributed network controller architectures may similarly be employed to pool, load balance, and otherwise increase the communicative bandwidth required by clients 902 and the servers 904. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks,

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware and/or software.

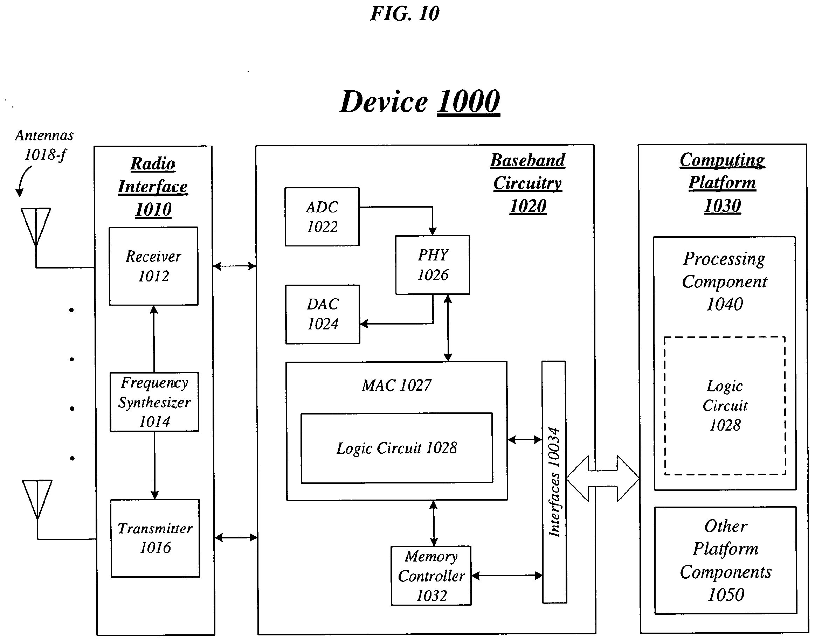

**FIG. 10** illustrates an embodiment of a communications device 1000 that may implement one or more of network manager 106, element manager 108, message flows 300, 500, and/or logic flow 600, according to some embodiments. In some embodiments, communications device 1000 may implement eNBs 204, 304, 306, 504, and 506, for example. In various embodiments, device 1000 may comprise a logic circuit 1028. The logic circuit 1028 may include physical circuits to perform operations described for one or more of network manager 106, element manager 108, message flows 300, 500, and/or logic flow 600, for example. As shown in FIG. 10, device 1000 may include a radio interface 1010, baseband circuitry 1020, and computing platform 1030, although the embodiments are not limited to this configuration.

The device 1000 may implement some or all of the structure and/or operations for one or more of network manager 106, element manager 108, message flows 300, 500, and/or logic flow 600, and logic circuit 1028 in a single computing entity, such as entirely within a single device. Alternatively, the device 1000 may distribute portions of the structure and/or operations for one or more of network manager 106, element manager 108, message flows 300, 500, and/or logic flow 600, and logic circuit 1028 across multiple computing entities using a distributed system architecture, such as a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

In one embodiment, radio interface 1010 may include a component or combination of components adapted for transmitting and/or receiving single-carrier or multi-carrier modulated signals (e.g., including complementary code keying (CCK), orthogonal frequency division multiplexing (OFDM), and/or single-carrier frequency division multiple access (SC-FDMA) symbols) although the embodiments are not limited to any specific over-the-air interface or modulation scheme. Radio interface 1010 may include, for example, a receiver 1012, a frequency synthesizer 1014, and/or a transmitter 1016. Radio interface 1010 may include bias controls, a crystal oscillator and/or one or more antennas 1018-*f*. In another embodiment, radio interface 1010 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 1020 may communicate with radio interface 1010 to process receive and/or transmit signals and may include, for example, a mixer for down-converting received RF signals, an analog-to-digital converter 1022 for converting analog signals to digital form, a digital-to-analog converter 1024 for converting digital signals to analog form, and a mixer for up-converting signals for transmission. Further, baseband circuitry 1020 may include a baseband or physical layer (PHY) processing circuit 1026 for PHY link layer processing of respective receive/transmit signals. Baseband circuitry 1020 may include, for example, a medium access control (MAC) processing circuit 1027 for MAC/data link layer processing. Baseband circuitry 1020 may include a memory controller 1032 for communicating with MAC processing circuit 1027 and/or a computing platform 1030, for example, via one or more interfaces 10034.

In some embodiments, PHY processing circuit 1026 may include a frame construction and/or detection module, in combination with additional circuitry such as a buffer memory, to construct and/or deconstruct communication frames. Alternatively or in addition, MAC processing circuit 1027 may share processing for certain of these functions or perform these processes independent of PHY processing circuit 1026. In some embodiments, MAC and PHY processing may be integrated into a single circuit.

The computing platform 1030 may provide computing functionality for the device 1000. As shown, the computing platform 1030 may include a processing component 1040. In addition to, or alternatively of, the baseband circuitry 1020, the device 1000 may execute processing operations or logic for one or more of network manager 106, element manager 108, message flows 300, 500, and/or logic flow 600, and logic circuit 1028 using the processing component 1040. The processing component 1040 (and/or PHY 1026 and/or MAC 1027) may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

The computing platform 1030 may further include other platform components 1050. Other platform components 1050 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Device 1000 may be, for example, an eNB, an ultra-mobile device, a mobile device, a fixed device, a machine-to-machine (M2M) device, a personal digital assistant (PDA), a mobile computing device, a smart phone, a telephone, a digital telephone, a cellular telephone, user equipment, eBook readers, a handset, a one-way pager, a two-way pager, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a mini-computer, a main frame computer, a supercomputer, a network appliance, a web appliance, a distributed computing system, multiprocessor systems, processor-based systems, consumer electronics, programmable consumer electronics, game devices, display, television, digital television, set top box, wireless access point, base station, node B, subscriber station, mobile subscriber center, radio network controller, router, hub, gateway, bridge, switch, machine, or combination thereof. Accordingly, functions and/or specific configurations of device 1000 described herein, may be included or omitted in various embodiments of device 1000, as suitably desired.

Embodiments of device 1000 may be implemented using single input single output (SISO) architectures. However, certain implementations may include multiple antennas (e.g., antennas 1018-*f*) for transmission and/or reception using adaptive antenna techniques for beamforming or spatial division multiple access (SDMA) and/or using MIMO communication techniques.

The components and features of device 1000 may be implemented using any combination of discrete circuitry, application specific integrated circuits (ASICs), logic gates and/or single chip architectures. Further, the features of device 1000 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 1000 shown in the block diagram of FIG. 10 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

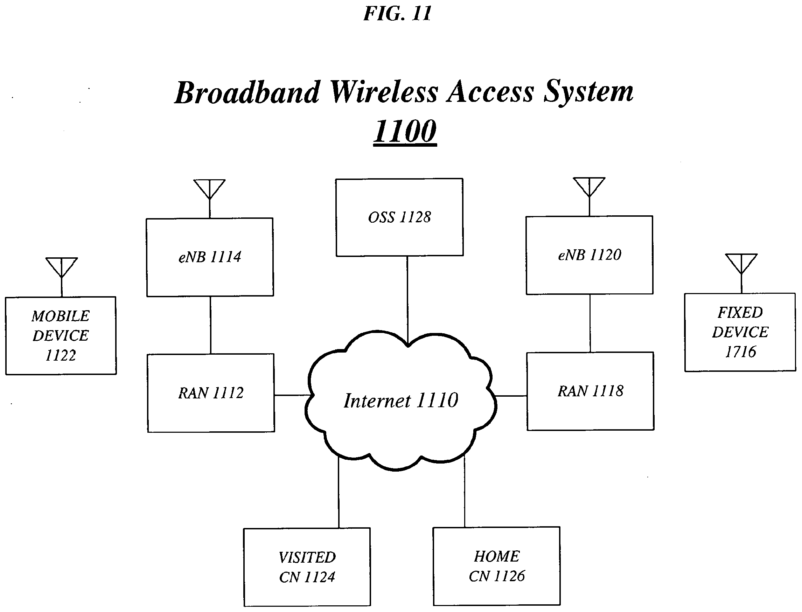

**FIG. 11** illustrates an embodiment of a broadband wireless access system 1100. As shown in FIG. 11, broadband wireless access system 1100 may be an internet protocol (IP) type network comprising an internet 1110 type network or the like that is capable of supporting mobile wireless access and/or fixed wireless access to internet 1110. In one or more embodiments, broadband wireless access system 1100 may comprise any type of orthogonal frequency division multiple access (OFDMA)-based or single-carrier frequency division multiple access (SC-FDMA)-based wireless network, such as a system compliant with one or more of the 3GPP LTE Specifications and/or IEEE 802.16 Standards, and the scope of the claimed subject matter is not limited in these respects.

In the exemplary broadband wireless access system 1100, radio access networks (RANs) 1112 and 1118 are capable of coupling with evolved node Bs (eNBs) 1114 and 1120, respectively, to provide wireless communication between one or more fixed devices 1716 and internet 1110 and/or between or one or more mobile devices 1122 and Internet 1110. One example of a fixed device 1716 and a mobile device 1122 is device 1000 of FIG. 10, with the fixed device 1716 comprising a stationary version of device 1000 and the mobile device 1122 comprising a mobile version of device 1000. RANs 1112 and 1118 may implement profiles that are capable of defining the mapping of network functions to one or more physical entities on broadband wireless access system 1100. eNBs 1114 and 1120 may comprise radio equipment to provide RF communication with fixed device 1716 and/or mobile device 1122, such as described with reference to device 1000, and may comprise, for example, the PHY and MAC layer equipment in compliance with a 3GPP LTE Specification or an IEEE 802.16 Standard. eNBs 1114 and 1120 may further comprise an IP backplane to couple to Internet 1110 via RANs 1112 and 1118, respectively, although the scope of the claimed subject matter is not limited in these respects.

Broadband wireless access system 1100 may further comprise a visited core network (CN) 1124 and/or a home CN 1126, each of which may be capable of providing one or more network functions including but not limited to proxy and/or relay type functions, for example authentication, authorization and accounting (AAA) functions, dynamic host configuration protocol (DHCP) functions, or domain name service controls or the like, domain gateways such as public switched telephone network (PSTN) gateways or voice over internet protocol (VoIP) gateways, and/or internet protocol (IP) type server functions, or the like. However, these are merely example of the types of functions that are capable of being provided by visited CN 1124 and/or home CN 1126, and the scope of the claimed subject matter is not limited in these respects. Visited CN 1124 may be referred to as a visited CN in the case where visited CN 1124 is not part of the regular service provider of fixed device 1716 or mobile device 1122, for example where fixed device 1716 or mobile device 1122 is roaming away from its respective home CN 1126, or where broadband wireless access system 1100 is part of the regular service provider of fixed device 1716 or mobile device 1122 but where broadband wireless access system 1100 may be in another location or state that is not the main or home location of fixed device 1716 or mobile device 1122. The embodiments are not limited in this context.

Fixed device 1716 may be located anywhere within range of one or both of eNBs 1114 and 1120, such as in or near a home or business to provide home or business customer broadband access to Internet 1110 via eNBs 1114 and 1120 and RANs 1112 and 1118, respectively, and home CN 1126. It is worthy of note that although fixed device 1716 is generally disposed in a stationary location, it may be moved to different locations as needed. Mobile device 1122 may be utilized at one or more locations if mobile device 1122 is within range of one or both of eNBs 1114 and 1120, for example. In accordance with one or more embodiments, operation support system (OSS) 1128 may be part of broadband wireless access system 1100 to provide management functions for broadband wireless access system 1100 and to provide interfaces between functional entities of broadband wireless access system 1100. Broadband wireless access system 1100 of FIG. 11 is merely one type of wireless network showing a certain number of the components of broadband wireless access system 1100, and the scope of the claimed subject matter is not limited in these respects.

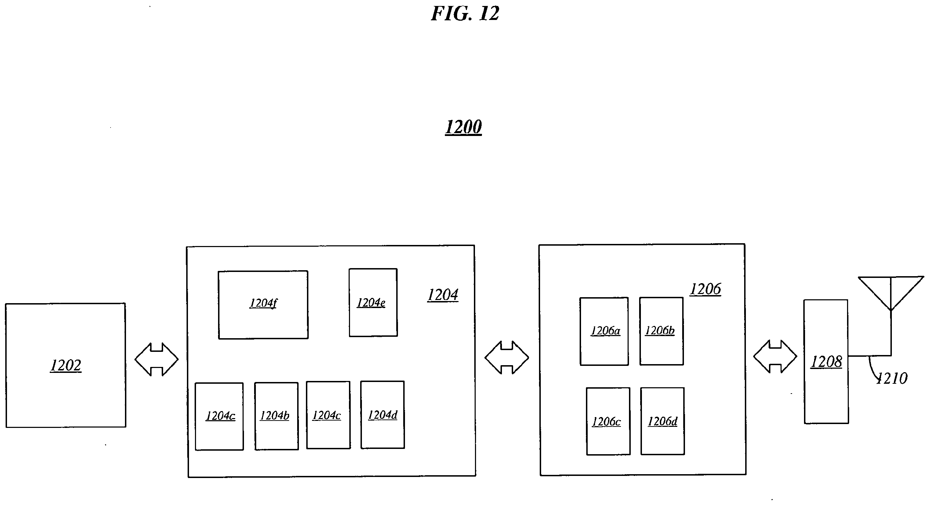

**FIG. 12** illustrates an example of a UE device 1200 that may be representative of a UE that implements one or more of the disclosed techniques in various embodiments. In some embodiments, the UE device 1200 may include application circuitry 1202, baseband circuitry 1204, Radio Frequency (RF) circuitry 1206, front-end module (FEM) circuitry 1208 and one or more antennas 1210, coupled together at least as shown. In some embodiments, the components described within FIG. 12 may be present within an eNB, such as eNBs 204, 304, 306, 504, and 506, for example.

The application circuitry 1202 may include one or more application processors. For example, the application circuitry 1202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 1204 may include circuitry such as, but not limited to, one or more single-core or multi-core processors. The baseband circuitry 1204 may include one or more baseband processors and/or control logic to process baseband signals received from a receive signal path of the RF circuitry 1206 and to generate baseband signals for a transmit signal path of the RF circuitry 1206. Baseband processing circuity 1204 may interface with the application circuitry 1202 for generation and processing of the baseband signals and for controlling operations of the RF circuitry 1206. For example, in some embodiments, the baseband circuitry 1204 may include a second generation (2G) baseband processor 1204a, third generation (3G) baseband processor 1204b, fourth generation (4G) baseband processor 1204c, and/or other baseband processor(s) 1204d for other existing generations, generations in development or to be developed in the future (e.g., fifth generation (5G), 6G, etc.). The baseband circuitry 1204 (e.g., one or more of baseband processors 1204a-d) may handle various radio control functions that enable communication with one or more radio networks via the RF circuitry 1206. The radio control functions may include, but are not limited to, signal modulation/demodulation, encoding/decoding, radio frequency shifting, etc. In some embodiments, modulation/demodulation circuitry of the baseband circuitry 1204 may include Fast-Fourier Transform (FFT), precoding, and/or constellation mapping/demapping functionality. In some embodiments, encoding/decoding circuitry of the baseband circuitry 1204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1204e of the baseband circuitry 1204 may be configured to run elements of the protocol stack for signaling of the PHY, MAC, RLC, PDCP and/or RRC layers. In some embodiments, the baseband circuitry may include one or more audio digital signal processor(s) (DSP) 1204f. The audio DSP(s) 1204f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1204 and the application circuitry 1202 may be implemented together such as, for example, on a system on a chip (SOC).

In some embodiments, the baseband circuitry 1204 may provide for communication compatible with one or more radio technologies. For example, in some embodiments, the baseband circuitry 1204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1204 is configured to support radio communications of more than one wireless protocol may be referred to as multi-mode baseband circuitry.

RF circuitry 1206 may enable communication with wireless networks using modulated electromagnetic radiation through a non-solid medium. In various embodiments, the RF circuitry 1206 may include switches, filters, amplifiers, etc. to facilitate the communication with the wireless network. RF circuitry 1206 may include a receive signal path which may include circuitry to down-convert RF signals received from the FEM circuitry 1208 and provide baseband signals to the baseband circuitry 1204. RF circuitry 1206 may also include a transmit signal path which may include circuitry to up-convert baseband signals provided by the baseband circuitry 1204 and provide RF output signals to the FEM circuitry 1208 for transmission.

In some embodiments, the RF circuitry 1206 may include a receive signal path and a transmit signal path. The receive signal path of the RF circuitry 1206 may include mixer circuitry 1206a, amplifier circuitry 1206b and filter circuitry 1206c. The transmit signal path of the RF circuitry 1206 may include filter circuitry 1206c and mixer circuitry 1206a. RF circuitry 1206 may also include synthesizer circuitry 1206d for synthesizing a frequency for use by the mixer circuitry 1206a of the receive signal path and the transmit signal path. In some embodiments, the mixer circuitry 1206a of the receive signal path may be configured to down-convert RF signals received from the FEM circuitry 1208 based on the synthesized frequency provided by synthesizer circuitry 1206d. The amplifier circuitry 1206b may be configured to amplify the down-converted signals and the filter circuitry 1206c may be a low-pass filter (LPF) or band-pass filter (BPF) configured to remove unwanted signals from the down-converted signals to generate output baseband signals. Output baseband signals may be provided to the baseband circuitry 1204 for further processing. In some embodiments, the output baseband signals may be zero-frequency baseband signals, although this is not a requirement. In some embodiments, mixer circuitry 1206a of the receive signal path may comprise passive mixers, although the scope of the embodiments is not limited in this respect.

In some embodiments, the mixer circuitry 1206a of the transmit signal path may be configured to up-convert input baseband signals based on the synthesized frequency provided by the synthesizer circuitry 1206d to generate RF output signals for the FEM circuitry 1208. The baseband signals may be provided by the baseband circuitry 1204 and may be filtered by filter circuitry 1206c. The filter circuitry 1206c may include a low-pass filter (LPF), although the scope of the embodiments is not limited in this respect.

In some embodiments, the mixer circuitry 1206a of the receive signal path and the mixer circuitry 1206a of the transmit signal path may include two or more mixers and may be arranged for quadrature downconversion and/or upconversion respectively. In some embodiments, the mixer circuitry 1206a of the receive signal path and the mixer circuitry 1206a of the transmit signal path may include two or more mixers and may be arranged for image rejection (e.g., Hartley image rejection). In some embodiments, the mixer circuitry 1206a of the receive signal path and the mixer circuitry 1206a may be arranged for direct downconversion and/or direct upconversion, respectively. In some embodiments, the mixer circuitry 1206a of the receive signal path and the mixer circuitry 1206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1206 may include analog-to-digital converter (ADC) and digital-to-analog converter (DAC) circuitry and the baseband circuitry 1204 may include a digital baseband interface to communicate with the RF circuitry 1206.

In some dual-mode embodiments, a separate radio IC circuitry may be provided for processing signals for each spectrum, although the scope of the embodiments is not limited in this respect.

In some embodiments, the synthesizer circuitry 1206d may be a fractional-N synthesizer or a fractional N/N+1 synthesizer, although the scope of the embodiments is not limited in this respect as other types of frequency synthesizers may be suitable. For example, synthesizer circuitry 1206d may be a delta-sigma synthesizer, a frequency multiplier, or a synthesizer comprising a phase-locked loop with a frequency divider.

The synthesizer circuitry 1206d may be configured to synthesize an output frequency for use by the mixer circuitry 1206a of the RF circuitry 1206 based on a frequency input and a divider control input. In some embodiments, the synthesizer circuitry 1206d may be a fractional N/N+1 synthesizer.

In some embodiments, frequency input may be provided by a voltage controlled oscillator (VCO), although that is not a requirement. Divider control input may be provided by either the baseband circuitry 1204 or the applications processor 1202 depending on the desired output frequency. In some embodiments, a divider control input (e.g., N) may be determined from a look-up table based on a channel indicated by the applications processor 1202.

Synthesizer circuitry 1206d of the RF circuitry 1206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1206 may include an IQ/polar converter.

FEM circuitry 1208 may include a receive signal path which may include circuitry configured to operate on RF signals received from one or more antennas 1210, amplify the received signals and provide the amplified versions of the received signals to the RF circuitry 1206 for further processing. FEM circuitry 1208 may also include a transmit signal path which may include circuitry configured to amplify signals for transmission provided by the RF circuitry 1206 for transmission by one or more of the one or more antennas 1210.

In some embodiments, the FEM circuitry 1208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1206). The transmit signal path of the FEM circuitry 1208 may include a power amplifier (PA) to amplify input RF signals (e.g., provided by RF circuitry 1206), and one or more filters to generate RF signals for subsequent transmission (e.g., by one or more of the one or more antennas 1210.

In some embodiments, the UE device 1200 may include additional elements such as, for example, memory/storage, display, camera, sensor, and/or input/output (I/O) interface.

Various embodiments may be implemented using hardware elements, software elements, or a combination of both. Examples of hardware elements may include processors, microprocessors, circuits, circuit elements (e.g_{.}, transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Numerous specific details have been set forth herein to provide a thorough understanding of the embodiments. It will be understood by those skilled in the art, however, that the embodiments may be practiced without these specific details. In other instances, well-known operations, components, and circuits have not been described in detail so as not to obscure the embodiments. It can be appreciated that the specific structural and functional details disclosed herein may be representative and do not necessarily limit the scope of the embodiments.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

It should be noted that the methods described herein do not have to be executed in the order described, or in any particular order. Moreover, various activities described with respect to the methods identified herein can be executed in serial or parallel fashion.

Although specific embodiments have been illustrated and described herein, it should be appreciated that any arrangement calculated to achieve the same purpose may be substituted for the specific embodiments shown. It is to be understood that the above description has been made in an illustrative fashion, and not a restrictive one. Combinations of the above embodiments, and other embodiments not specifically described herein will be apparent to those of skill in the art upon reviewing the above description.

In the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate preferred embodiment. In the appended claims, the terms "including" and "in which" are used as the plain-English equivalents of the respective terms "comprising" and "wherein," respectively. Moreover, the terms "first," "second," and "third," etc. are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

What has been described above includes examples of the disclosed architecture. It is, of course, not possible to describe every conceivable combination of components and/or methodologies, but one of ordinary skill in the art may recognize that many further combinations and permutations are possible.

## Claims

1. A computer-implemented method for handover operations in a network, comprising:
receiving, at a source evolved node B, eNB, (304; 504) a measurement report from a user equipment, UE, (302; 502);
sending, by the source eNB (304; 504), a handover request to a target eNB (306; 506);
receiving, by the source eNB (304; 504), a handover acknowledgment from the target eNB (306; 506), the handover acknowledgement including an uplink grant schedule;
sending, by the source eNB (304; 504), a handover command to the UE (302; 502), the handover command including the uplink grant schedule; and
stopping a data transmission by the source eNB (304; 504) to the UE (302; 502) based upon an indication that a handover operation is complete, wherein the source eNB (304; 504) is responsible for deciding when to stop transmitting to the UE (302; 502).

2. The computer-implemented method of claim 1, wherein the source eNB (304; 504) continues to send data to the UE (302; 502) after sending the handover command, wherein data is not sent during an uplink grant schedule slot contained within the uplink grant schedule.

3. The computer-implemented method of claim 1, wherein the handover request includes a make-before-break indication and is sent via an x2 interface to the target eNB (306; 506).

4. The computer-implemented method of claim 1, wherein an indication of UE handover capabilities is sent with the handover request.

5. The computer-implemented method of claim 1, wherein the handover acknowledgement includes an identification as random-access channel, RACH,-less and a make-before-break indication, and is received via an x2 interface from the target eNB (306; 506).

6. The computer-implemented method of claim 1, further comprising, in response to being executed on a computing device, causing the computing device to stop a data transmission by the source eNB (304; 504) to the UE (302; 502) based upon a handover complete message from the target eNB (306; 506).

7. The computer-implemented method of claim 1, further comprising, in response to being executed on a computing device, causing the computing device to stop a data transmission by the source eNB (304; 504) to the UE (302; 502) based upon a determination by the source eNB (304; 504) that the UE (302; 502) has completed the handover.

8. The computer-implemented method of claim 6, wherein a handover complete message is received from the target eNB (306; 506) after the target eNB (306; 506) receives a RRC reconfiguration complete message in the UL grant from the UE (302; 502).

9. The computer-implemented method of claim 6, wherein the handover complete message is received from the target eNB (306; 506) after the target eNB (306; 506) receives a radio resource control, RRC, reconfiguration complete message in a packet data convergence protocol, PDCP, status report from the UE (302; 502).

10. The computer-implemented method of claim 1, wherein the source eNB (304; 504) stops data transmission to the UE (302; 502) after the UE (302; 502) starts tuning its RF to connect to the target eNB (306; 506) during the first uplink grant in the uplink grant schedule.

11. An apparatus for controlling handover operations of a source evolved node B, eNB, (304; 504) in a network, comprising:
processing circuitry; and
computer-readable storage media having stored thereon instructions for execution by the processing circuitry to cause the source eNB (304; 504) to:
receive, at the source eNB, (304; 504) a measurement report from a user equipment, UE, (302; 502);
send, by the source eNB (304; 504), a handover request a target eNB (306; 506);
receive, by the source eNB (304; 504), a handover acknowledgment from the target eNB (306; 506), the handover acknowledgement to include an uplink grant schedule;
send, by the source eNB (304; 504), a handover command to the UE (302; 502), the handover command including the uplink grant schedule; and
stop a data transmission by the source eNB (304; 504) to the UE (302; 502) based upon an indication that a handover operation is complete, wherein the source eNB (304; 504) is to be responsible for deciding when to stop transmitting to the UE (302; 502).

12. The apparatus of claim 11, wherein the instructions for execution by the processing circuitry to cause the source eNB (304; 504) to continue to send data to the UE (302; 502) after sending the handover command, wherein the instructions are such that data is not to be sent during an uplink grant schedule slot contained within the uplink grant schedule.

13. The apparatus of claim 11, wherein execution of the instructions further causes the source eNB (304, 504) to include in the handover request make-before-break indication and to send the handover request via an x2 interface to the target eNB (306; 506).

14. The apparatus of claim 11, wherein the instructions for execution by the processing circuitry further cause the source eNB (304; 504) to perform the steps of a method as claimed in any of claims 4-10.

15. A computer program comprising instructions that, when executed by a computing device associated with an apparatus for controlling handover operations of a source evolved node B, eNB, (304; 504) cause the computing device to cause the source eNB (304; 504) to perform the steps of a method as claimed in any of claims 1-10.

## Patentansprüche

1. Computerimplementiertes Verfahren für Übergabeoperationen in einem Netzwerk, das Folgendes umfasst:
Empfangen eines Messberichts von einem Anwendergerät, UE, (302; 502) bei einem evolvierten Ursprungs-Node B, Ursprungs-eNB, (304; 504);
Senden einer Übergabeanforderung durch den Ursprungs-eNB (304; 504) an einen Ziel-eNB (306; 506);
Empfangen einer Übergabebestätigung von dem Ziel-eNB (306; 506) durch den Ursprungs-eNB (304; 504), wobei die Übergabebestätigung einen Uplink-Freigabeplan enthält;
Senden des Übergabebefehls durch den Ursprungs-eNB (304; 504) an das UE (302; 502), wobei der Übergabebefehl den Uplink-Freigabeplan enthält; und
Stoppen einer Datenübertragung des Ursprungs-eNB (304; 504) an das UE (302; 502) basierend auf einer Anzeige, dass eine Übergabeoperation abgeschlossen ist, wobei der Ursprungs-eNB (304; 504) für das Entscheiden verantwortlich ist, wann das Übertragen an das UE (302; 502) gestoppt werden soll.

2. Computerimplementiertes Verfahren nach Anspruch 1, wobei der Ursprungs-eNB (304; 504) nach dem Senden des Übergabebefehls weiterhin Daten an das UE (302; 502) sendet, wobei die Daten während eines Uplink-Datenfreigabeschlitzes, der in dem Uplink-Freigabeplan enthalten ist, nicht gesendet werden.

3. Computerimplementiertes Verfahren nach Anspruch 1, wobei die Übergabeanforderung eine Überbrückungs-Anzeige enthält und über eine x2-Schnittstelle zu dem Ziel-eNB (306; 506) gesendet wird.

4. Computerimplementiertes Verfahren nach Anspruch 1, wobei eine Anzeige von UE-Übergabefähigkeiten mit der Übergabeanforderung gesendet wird.

5. Computerimplementiertes Verfahren nach Anspruch 1, wobei die Übergabebestätigung eine Identifizierung als Direktzugriffskanal-los, RACH-los, und eine Überbrückungs-Anzeige enthält und über eine x2-Schnittstelle von dem Ziel-eNB (306; 506) empfangen wird.

6. Computerimplementiertes Verfahren nach Anspruch 1, das ferner in Reaktion darauf, dass es auf einer Berechnungsvorrichtung ausgeführt wird, das Veranlassen der Berechnungsvorrichtung, eine Datenübertragung durch den Ursprungs-eNB (304; 504) an das UE (302; 502) basierend auf einer Übergabeabschlussnachricht von dem Ziel-eNB (306; 506) zu stoppen, umfasst.

7. Computerimplementiertes Verfahren nach Anspruch 1, das ferner in Reaktion darauf, dass es auf einer Berechnungsvorrichtung ausgeführt wird, das Veranlassen der Berechnungsvorrichtung, eine Datenübertragung durch den Ursprungs-eNB (304; 504) an das UE (302; 502) basierend auf einer Bestimmung durch den Ursprungs-eNB (304; 504), dass das UE (302; 502) die Übergabe abgeschlossen hat, zu stoppen, umfasst.

8. Computerimplementiertes Verfahren nach Anspruch 6, wobei eine Übergabeabschlussnachricht von dem Ziel-eNB (306; 506) empfangen wird, nachdem der Ziel-eNB (306; 506) eine RRC-Neukonfigurations-Abschlussnachricht in der UL-Freigabe von dem UE (302; 502) empfangen hat.

9. Computerimplementiertes Verfahren nach Anspruch 6, wobei die Übergabeabschlussnachricht von dem Ziel-eNB (306; 506) empfangen wird, nachdem der Ziel-eNB (306; 506) eine Funkressourcensteuerungs-Neukonfigurations-Abschlussnachricht, RRC-Neukonfigurations-Abschlussnachricht, in einem Paketdatenkonvergenzprotokoll-Statusbericht, PDCP-Statusbericht von dem UE (302; 502) empfangen hat.

10. Computerimplementiertes Verfahren nach Anspruch 1, wobei der Ursprungs-eNB (304, 504) die Datenübertragung an das UE (302; 502) stoppt, nachdem das UE (302; 502) das Abstimmen seiner RF zum Verbinden mit dem Ziel-eNB (306; 506) während der ersten Uplink-Freigabe in dem Uplink-Freigabeplan gestartet hat.

11. Einrichtung zum Steuern von Übergabeoperationen eines evolvierten Ursprungs-Node B, Ursprungs-eNB, (304; 504) in einem Netzwerk, die Folgendes umfasst:
eine Verarbeitungsschaltungsanordnung; und
computerlesbare Speichermedien, die Anweisungen zur Ausführung durch die Verarbeitungsschaltungsanordnung darauf gespeichert aufweisen, um den Ursprungs-eNB (304; 504) zu veranlassen zum:
Empfangen eines Messberichts von einem Anwendergerät, UE, (302; 502) durch den Ursprungs-eNB (304; 504);
Senden einer Übergabeanforderung durch den Ursprungs-eNB (304; 504) an einen Ziel-eNB (306; 506);
Empfangen einer Übergabebestätigung von dem Ziel-eNB (306; 506) durch den Ursprungs-eNB (304; 504), wobei die Übergabebestätigung einen Uplink-Freigabeplan enthalten soll;
Senden eines Übergabebefehls durch den Ursprungs-eNB (304; 504) an das UE (302; 502), wobei der Übergabebefehl den Uplink-Freigabeplan enthält; und
Stoppen einer Datenübertragung des Ursprungs-eNBs (304; 504) an das UE (302; 502) basierend auf einer Anzeige, dass eine Übergabeoperation abgeschlossen ist, wobei der Ursprungs-eNB (304; 504) für das Entscheiden verantwortlich sein soll, wann das Übertragen an das UE (302; 502) gestoppt werden soll.

12. Einrichtung nach Anspruch 11, wobei die Anweisungen zur Ausführung durch die Verarbeitungsschaltungsanordnung dazu dienen, den Ursprungs-eNB (304; 504) zu veranlassen, nach dem Senden des Übergabebefehls weiterhin Daten an das UE (302; 502) zu senden, wobei die Anweisungen derart sind, dass Daten während eines Uplink-Freigabeplanschlitzes, der in dem Uplink-Freigabeplan enthalten ist, nicht zu senden sind.

13. Einrichtung nach Anspruch 11, wobei die Ausführung der Anweisungen den Ursprungs-eNB (304; 504) ferner veranlasst, in die Übergabeanforderung eine Überbrückungs-Anzeige aufzunehmen und die Übergabeanforderung über eine x2-Schnittstelle an den Ziel-eNB (306; 506) zu senden.

14. Einrichtung nach Anspruch 11, wobei die Anweisungen zur Ausführung durch die Verarbeitungsschaltungsanordnung den Ursprungs-eNB (304; 504) ferner veranlassen, die Schritte eines Verfahrens nach einem der Ansprüche 4-10 auszuführen.

15. Computerprogramm, das Anweisungen umfasst, die dann, wenn sie durch eine Berechnungsvorrichtung, die einer Einrichtung zum Steuern von Übergabeoperationen eines evolvierten Ursprungs-Node B, eNB, (304; 504) zugeordnet ist, ausgeführt werden, die Berechnungsvorrichtung veranlassen, den Ursprungs-eNB (304; 504) zu veranlassen, die Schritte eines Verfahrens nach einem der Ansprüche 1-10 auszuführen.

## Revendications

1. Procédé mis en œuvre par ordinateur pour des opérations de transfert dans un réseau, comprenant les étapes suivantes :
recevoir, au niveau d'un nœud B évolué source, eNB, (304 ; 504) un rapport de mesure provenant d'un équipement utilisateur, UE, (302 ; 502) ;
envoyer, par le nœud eNB source (304 ; 504), une demande de transfert vers un nœud eNB cible (306 ; 506) ;
recevoir, par le nœud eNB source (304 ; 504), un accusé de réception de transfert du nœud eNB cible (306 ; 506), l'accusé de réception de transfert comprenant une planification d'octroi de liaison montante ;
envoyer, par le nœud eNB source (304 ; 504), une commande de transfert à l'UE (302 ; 502), la commande de transfert comprenant la planification d'octroi de liaison montante ; et
arrêter une transmission de données par le nœud eNB source (304 ; 504) à l'UE (302 ; 502) sur la base d'une indication qu'une opération de transfert est achevée, le nœud eNB source (304 ; 504) étant chargé de décider du moment où il doit arrêter de transmettre à l'UE (302 ; 502).

2. Procédé mis en œuvre par ordinateur selon la revendication 1, dans lequel le nœud eNB source (304 ; 504) continue d'envoyer des données à l'UE (302 ; 502) après avoir envoyé la commande de transfert, où les données ne sont pas envoyées pendant un créneau de planification d'octroi de liaison montante contenu dans la planification d'octroi de liaison montante.

3. Procédé mis en œuvre par ordinateur selon la revendication 1, dans lequel la demande de transfert comprend une indication « make-before-break » et est envoyée par l'intermédiaire d'une interface x2 au nœud eNB cible (306 ; 506).

4. Procédé mis en œuvre par ordinateur selon la revendication 1, dans lequel une indication des capacités de transfert de l'UE est envoyée avec la demande de transfert.

5. Procédé mis en œuvre par ordinateur selon la revendication 1, dans lequel l'accusé de réception du transfert comprend une identification d'absence de canal d'accès aléatoire, RACH, et une indication « make-before-break », et est reçu par l'intermédiaire d'une interface x2 du nœud eNB cible (306 ; 506).

6. Procédé mis en œuvre par ordinateur selon la revendication 1, comprenant en outre, en réponse à son exécution sur un dispositif informatique, d'amener le dispositif informatique à arrêter une transmission de données par le nœud eNB source (304; 504) à l'UE (302 ; 502) sur la base d'un message d'achèvement de transfert depuis le nœud eNB cible (306 ; 506).

7. Procédé mis en œuvre par ordinateur selon la revendication 1, comprenant en outre, en réponse à son exécution sur un dispositif informatique, d'amener le dispositif informatique à arrêter une transmission de données par le nœud eNB source (304 ; 504) vers l'UE (302 ; 502) sur la base d'une détermination par le nœud eNB source (304; 504) que l'UE (302; 502) a terminé le transfert.

8. Procédé mis en œuvre par ordinateur selon la revendication 6, dans lequel un message d'achèvement de transfert est reçu du nœud eNB cible (306 ; 506) après que le nœud eNB cible (306; 506) a reçu un message d'achèvement de reconfiguration RRC dans l'octroi d'UL depuis l'UE (302 ; 502).

9. Procédé mis en œuvre par ordinateur selon la revendication 6, dans lequel le message d'achèvement de transfert est reçu du nœud eNB cible (306 ; 506) après que le nœud eNB cible (306; 506) a reçu un message d'achèvement de reconfiguration du contrôle des ressources radio, RRC, dans un rapport d'état de protocole de convergence de données par paquets, PDCP, provenant de l'UE (302 ; 502).

10. Procédé mis en œuvre par ordinateur selon la revendication 1, dans lequel le nœud eNB source (304 ; 504) arrête la transmission de données vers l'UE (302 ; 502) après que l'UE (302 ; 502) a commencé à accorder sa RF pour se connecter au nœud eNB cible (306 ; 506) pendant le premier octroi de liaison montante dans la planification d'octroi de liaison montante.

11. Appareil pour contrôler les opérations de transfert d'un nœud B évolué source, eNB, (304; 504) dans un réseau, l'appareil comprenant :
des circuits de traitement ; et
des supports de stockage lisibles par ordinateur sur lesquels sont stockées des instructions destinées à être exécutées par les circuits de traitement pour amener le nœud eNB source (304 ; 504) :
à recevoir, au niveau du nœud eNB source (304 ; 504) un rapport de mesure provenant d'un équipement utilisateur, UE, (302 ; 502) ;
à envoyer, par le nœud eNB source (304 ; 504), une demande de transfert vers un nœud eNB cible (306 ; 506) ;
à recevoir, par le nœud eNB source (304 ; 504), un accusé de réception de transfert du nœud eNB cible (306 ; 506), l'accusé de réception de transfert comprenant une planification d'octroi de liaison montante ;
à envoyer, par le nœud eNB source (304 ; 504), une commande de transfert à l'UE (302 ; 502), la commande de transfert comprenant la planification d'octroi de liaison montante ; et
à arrêter une transmission de données par le nœud eNB source (304 ; 504) à l'UE (302 ; 502) sur la base d'une indication qu'une opération de transfert est achevée, le nœud eNB source (304 ; 504) étant chargé de décider du moment où il doit arrêter de transmettre à l'UE (302 ; 502).

12. Appareil selon la revendication 11, dans lequel les instructions destinées à l'exécution par les circuits de traitement pour amènent le nœud eNB source (304 ; 504) à continuer à envoyer des données à l'UE (302 ; 502) après avoir envoyé la commande de transfert, où les instructions sont telles que les données ne doivent pas être envoyées pendant un créneau de planification d'octroi de liaison montante contenu dans la planification d'octroi de liaison montante.

13. Appareil selon la revendication 11, dans lequel l'exécution des instructions amène en outre le nœud eNB source (304, 504) à inclure dans la demande de transfert l'indication « make-before-break » à envoyer la demande de transfert par l'intermédiaire d'une interface x2 au nœud eNB cible (306 ; 506).

14. Appareil selon la revendication 11, dans lequel les instructions d'exécution par les circuits de traitement amènent en outre le nœud eNB source (304 ; 504) à exécuter les étapes d'un procédé tel que revendiqué dans l'une quelconque des revendications 4 à 10.

15. Programme informatique comprenant des instructions qui, lorsqu'elles sont exécutées par un dispositif informatique associé à un appareil pour contrôler les opérations de transfert d'un nœud B évolué source, eNB, (304 ; 504), amènent le dispositif informatique à faire en sorte que le nœud eNB source (304 ; 504) exécute les étapes d'un procédé tel que revendiqué dans l'une quelconque des revendications 1 à 10.
